# EUROPEAN PATENT APPLICATION

(11) **EP 3 531 244 A1**
(43) Date of publication of application: **28.08.2019**
(21) Application number: 18158688.4
(22) Date of filing: 26.02.2018
(51) Int. Cl.: G06F 3/01

(54) **METHOD, APPARATUS AND SYSTEM PROVIDING ALTERNATIVE REALITY ENVIRONMENT**

(71) Applicant: THOMSON LICENSING, 92130 Issy les Moulineaux (FR)
(72) Inventor: LIMOR, Josh, Indianapolis, IN Indiana 46290 (US); VERDIER, Alain, 35576 Cesson-Sévigné (FR)
(74) Representative: Huchet, Anne

(57) **Abstract**

One or more processors provide image information to a wearable display device to produce a displayed image on a surface of the wearable display device that includes a first computer generated image (CGI) and a second CGI, wherein the first CGI represents a virtual object in a first position in the displayed image to coincide with a first shadow image included in a background display visible through the surface; and the second CGI represents an image corresponding to the background display and in a second position in the displayed image to hide a portion of a second shadow image included in the background display.

## Description

### TECHNICAL FIELD

The present disclosure involves alternative reality technology.

### BACKGROUND

Larger TVs, better sound, and improved images for the home have been a threat to theatrical attendance while also increasing the demand for high quality content. With the development of virtual reality (VR) for personal use, an opportunity exists to determine the next generation of entertainment experience and, for example, what could replace the theater-going experience for a social event outside of the home. However, each of the current alternative reality technologies (VR, augmented reality (AR), and mixed reality (MR)) present their own limitations for consumer consumption of storytelling. Virtual Reality is a very isolating and disembodied experience. This can work for an individual and price points will continue to decrease. VR requires further development on embodiment and interactivity with additional users in other VR rigs to overcome the isolation. Augmented Reality overcomes the isolation lending itself to more shared experiences, but the story must then occur within a given environment in which the user is located or resides. In AR, however objects do not necessarily interact with the environment and only occur within it. Additionally, images generated in AR are limited in contrast because the minimum light level in the experience is the same as the minimum light in the room. Mixed Reality takes AR a step further to allow these augmented objects to occur more realistically within the given physical environment, allowing them to appear as if they exist in the real world. MR will require more intelligent ways to interact with the real world to allow for more realistic interaction to light/shadow and other objects. While this is an interesting space it does not provide the universal control of the world to a content creator. Thus, a need exists to provide a more communal, social entertainment experience for AR, VR and MR implementations to enable applications creating such environments, e.g., in next-generation theaters, to be sufficiently compelling for users and audiences to seek out and participate in experiences provided in these environments.

### SUMMARY

These and other drawbacks and disadvantages of the prior art may be addressed by one or more embodiments of the present principles.

In accordance with an aspect of the present principles, an embodiment comprises a collaborative space with a controller to provide central control of multiple devices such as wearable devices, e.g., head mounted displays (HMD), and separate video elements such as video walls, the controller controls the multiple devices and separate video elements to provide visible representations of virtual objects that appear to move between or cross over from one device such as an HMD to another device such as a video wall.

These and other aspects, features and advantages of the present principles will become apparent from the following detailed description of exemplary embodiments, which is to be read in connection with the accompanying drawings.

### BRIEF DESCRIPTION OF THE DRAWINGS

The present principles may be better understood by considering the detailed description provided herein in conjunction with the following exemplary figures, in which:
FIG. 1 is a diagram showing an embodiment of a system in accordance with the present principles;
FIG. 2 shows, in block diagram form, another embodiment of a system in accordance with the present principles;
FIG. 3 illustrates, in block diagram form, an embodiment of a method in accordance with the present principles;
FIG. 4 illustrates an embodiment of an alternative reality environment in accordance with the present principles;
FIG. 5 illustrates another embodiment of an alternate reality environment in accordance with the present principles;
FIG. 6 illustrates another embodiment of an alternate reality environment in accordance with the present principles;
FIG. 7 illustrates another embodiment of an alternate reality environment in accordance with the present principles;
FIG. 8 provides an exemplary illustration of a view through an alternative reality device in accordance with the present principles;
FIG. 9A, 9B and 9C illustrate an embodiment of an alternative reality device in accordance with the present principles;
FIG. 10 illustrates an embodiment of an alternative reality environment in accordance with the present principles;
FIG. 11 illustrates another embodiment of an alternative reality environment in accordance with the present principles;
FIG. 12 illustrates another embodiment of an alternative reality environment in accordance with the present principles;

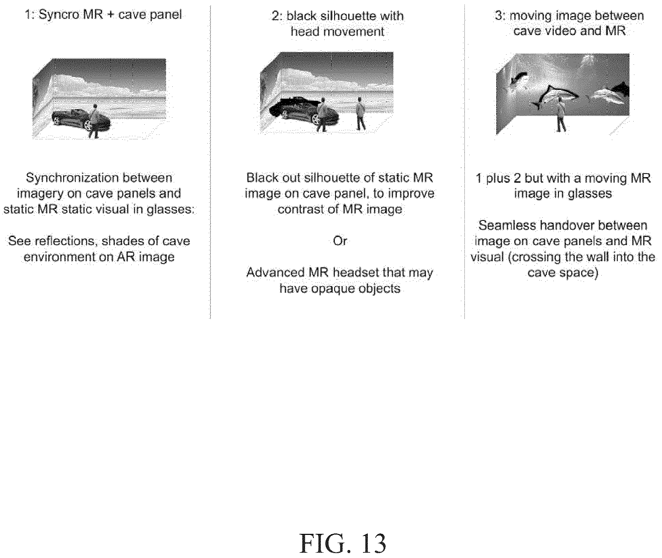

FIG. 13 illustrates several embodiments of an alternative reality environment in accordance with the present principles;
FIG. 14A, 14B and 14C illustrate aspects of an embodiment of an alternative reality environment in accordance with the present principles;
FIG. 15 illustrates various embodiments of an alternative reality environment in accordance with the present principles;
FIG. 16 illustrates, in block diagram form, an embodiment in accordance with the present principles;
FIG. 17 illustrates, in block diagram form, an embodiment in accordance with the present principles;
FIG. 18 illustrates, in block diagram form, an embodiment in accordance with the present principles;
FIG. 19 illustrates, in block diagram form, an embodiment in accordance with the present principles;
FIG. 20 illustrates, in block diagram form, an embodiment in accordance with the present principles;
FIG. 21 illustrates, in block diagram form, an embodiment in accordance with the present principles;
FIG. 22 illustrates, in block diagram form, an embodiment in accordance with the present principles;
FIG. 23 illustrates, in block diagram form, an embodiment in accordance with the present principles;
FIG. 24 illustrates, in block diagram form, an embodiment in accordance with the present principles;
FIG. 25 illustrates, in block diagram form, an embodiment in accordance with the present principles;
FIG. 26 illustrates, in block diagram form, an embodiment in accordance with the present principles;
FIG. 27 illustrates, in block diagram form, an embodiment in accordance with the present principles;
FIG. 28 illustrates, in block diagram form, an embodiment in accordance with the present principles;
FIG. 29 illustrates an embodiment of aspects of the present principles;
FIG. 30 illustrates another embodiment of aspects of the present principles;
FIG. 31 illustrates, in block diagram form, an embodiment of a system and apparatus in accordance with the present principles;
FIG. 32 is a diagram showing an embodiment in accordance with the present principles;
FIG. 33 is a diagram showing an embodiment in accordance with the present principles;
FIG. 34 is a diagram showing an embodiment of a method in accordance with the present principles; and
FIG. 35 is a diagram showing an embodiment of another method in accordance with the present principles.

In the various figures, like reference designators refer to the same or similar features.

### DETAILED DESCRIPTION

Embodiments of the present disclosure will be described herein below with reference to the accompanying drawings. In the following description, well-known functions or constructions are not described in detail to avoid obscuring the present disclosure in unnecessary detail. Embodiments as described herein, e.g., of methods and/or apparatus and/or systems, are intended to be exemplary only. It should be understood that the word "exemplary" is used herein to mean "serving as an example, instance, or illustration." Any embodiment or feature described herein as "exemplary" is not necessarily to be construed as preferred or advantageous over other embodiments or features. The exemplary embodiments described herein are not meant to be limiting. It will be readily understood that certain aspects of the disclosed systems and methods can be arranged and combined in a wide variety of different configurations, all of which are contemplated herein.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with or through one or more intermediate components. Such intermediate components may include both hardware and software-based components.

The present description illustrates the principles of the present disclosure. It will thus be appreciated that those skilled in the art will be able to devise various arrangements that, although not explicitly described or shown herein, embody the principles of the disclosure and are included within its scope. Further, other embodiments beyond those described are contemplated and intended to be encompassed within the scope of the present disclosure. For example, additional embodiments may be created by combining, deleting, modifying, or supplementing various features of the disclosed embodiments.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

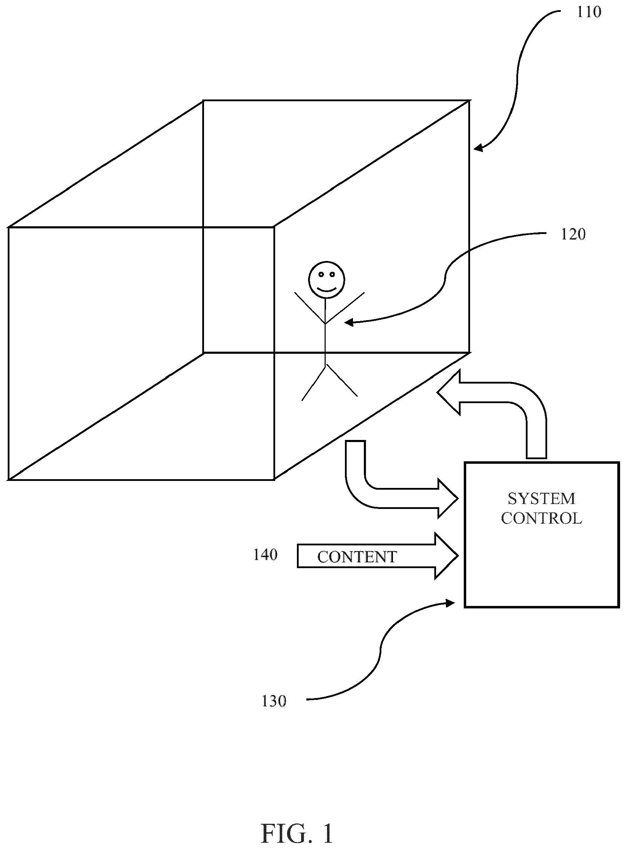

In the figures, Figure 1 shows an exemplary alternative reality environment, that may be referred to hereinafter as ARENV, in accordance with the present principles. The exemplary ARENV of Figure 1 includes an enclosed area 10 that may be a room of house, a theater, etc, for providing an alternative reality user experience (may be referred to hereinafter as ARUX). One or more users 20 are in ARENV 10 and may be wearing wearable devices such as augmented reality (AR) glasses or headgear, biometric sensors, or other devices (hereinafter generally as alternative reality devices (ARD)) that operate in collaboration with the ARENV to provide an alternative reality experience in accordance with the present principles and as described herein. Also included is a control system or device 30 that communicates with area 10, devices worn or held by user 20 and other ARD sensors and devices that may be included to control video, audio, motion effects, etc, that are part of the ARUX As indicated in Figure 1, control system 30 may communicate with area 10 and user or users 20 via wired and/or wireless means to provide and receive signals such as control signals and user feedback. System 30 may also receive content 40 from a content provider that may be used to create an environment. For example, control system 30 may receive content such as video and audio from a content provider such as a theater content delivery system, a head-end provider (e.g., a cable or satellite headend), a gateway device, an Internet service provdider, gateway device, etc. Control system 30 may then deliver video content for display on the video display walls, floor and ceiling of area 10 and/or a display device worn by user or users 20 to create a video representation of the ARENV. Audio content associated with the ARENV may be output on audio devices (e.g., loudspeakers) in the ARENV and/or via audio output features of ARD worn by user or users 20 or otherwise associated with creating the ARENV. Other effects such as vibration, motion, etc., associated with the content may communicated by control system 30 to other devices, e.g., such as transponders in the ARENV near a user or in contact with a user or devices worn by a user providing tactile feedback and/or effects.

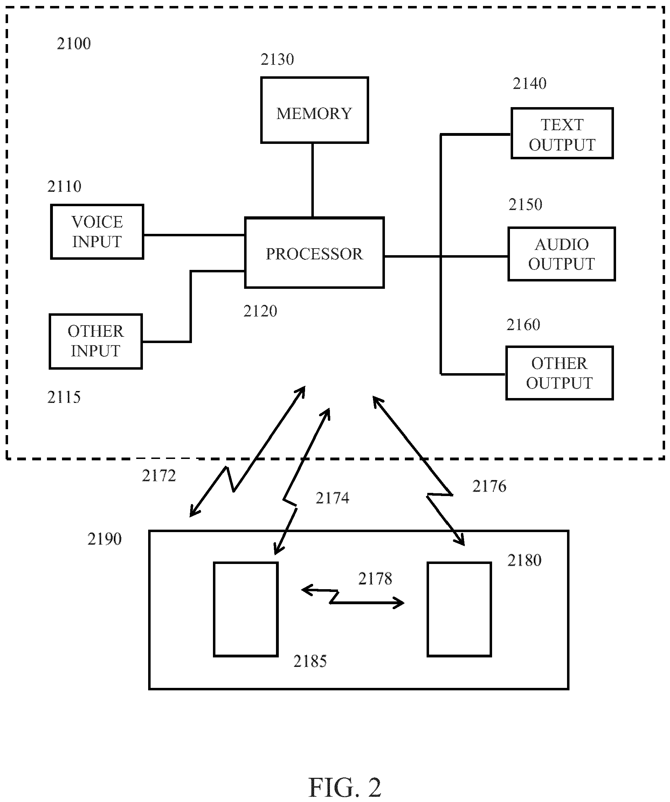

Figure 2 shows another embodiment in accordance with the present principles. In Figure 2, apparatus or a system may include a control system 100 that may provide control functions such as those described in regard to Figure 1. Control system 100 may include one or more processors such as processor 120 in Figure 2 coupled to a memory 130 that may include one or more memory devices such as RAM, ROM, PROM, hard-disk drive (HDD), etc., in various configurations as will be apparent to one skilled in the art. Control system 100 may also include various input/output, or I/O, ports illustrated as exemplary ports 110, 115, 140, 150 and 160 in Figure 2 for receiving inputs such as content and control commands and delivering outputs such as video, audio, etc. as described above. Communication of the inputs and outputs may occur between control system 100 and various devices via wired or wireless communications. For example, Figure 2 illustrates wireless communications 172, 174, 176 and 178 for communications from control system 100 to an ARENV 190 via 172 and to one or more users 180 and 185 within ARENV 190 via 174 and 176. Figure 2 also illustrates communications between users within ARENV 190, e.g., between users 180 and 185 via 178. Users such as 180 and 185 may each be equipped with one or more AR and/or VR devices, sensors, etc., such as AR glasses, tablets, smartphones, VR headsets, microphones, speakers, etc. Although Figure 2 illustrates users 180 and 185 being within environment 190, such users and the devices worn, carried or otherwise associated with the users may be within an ARENV such as a 360-wall space as described herein or not, i.e., no such ARENV is required. An exemplary embodiment in accordance with Figure 2 may comprise a centralized controller such as 100 in Figure 2 that controls data that can be sent to multiple VR and/or AR type devices and between such devices, e.g., 180 and 185, with or without the devices being in an environment such as a 360 wall space, wherein the centralized information may comprise, for example, data representing virtual objects that can be sent cross platform to various types of devices such as but not limited to AR glasses, tablets, smartphones, VR headsets, etc. Another exemplary embodiment in accordance with Figure 2 comprises apparatus providing a transactional service within a virtual reality environment and including a centralized controller controlling data that can be sent to multiple VR and/or AR type devices such as 180 and 185 with or without the devices being in an environment such as a 360 wall space, wherein the centralized information may comprise, for example, data representing virtual objects that can be sent cross platform to various types of devices such as but not limited to AR glasses, tablets, smartphones, VR headsets, etc., and wherein the controller communicates with the devices to provide a point of sale within the virtual space for enabling completion of transactions associated with the transactional service.

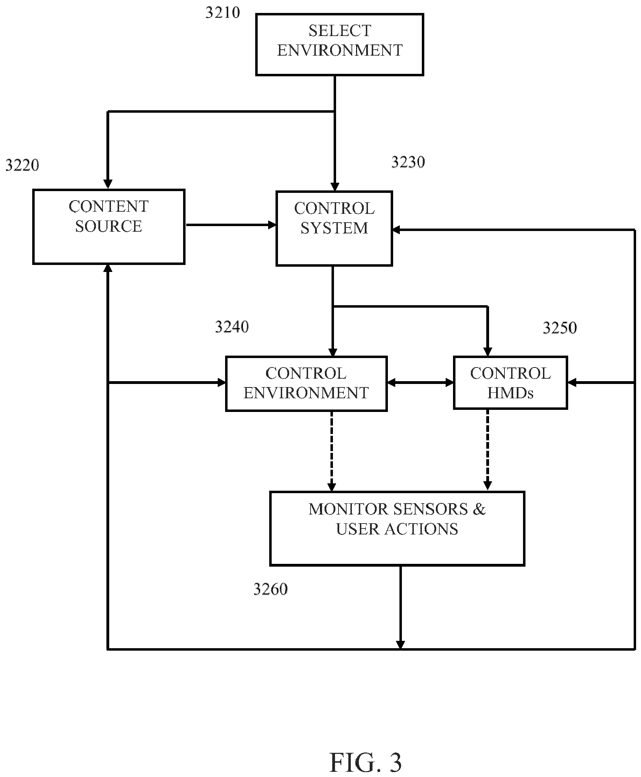

Figure 3 shows another embodiment in accordance with the present principles. Figure 3 illustrates an exemplary embodiment of a method for operation of an exemplary system or apparatus such as shown in Figure 1 or 2. In Figure 3, the exemplary method begins at step 210 where a user may select content for an ARENV. For example, a user may wish to experience being in an outdoor environment and select scenery such as mountain vistas, audio (e.g., wind, bird calls, etc.) and other features associated with the selected environment. The selection may occur, for example, by a user generating a command at step 230, e.g., using an input device such as a keyboard, touch screen, voice command, etc. The command may be received and processed by a control system at step 230, e.g., control system 30 of Figure 1 or 100 of Figure 2. Alternatively, or in addition, the command may be delivered directly to a content source at step 220. In response to the environment selection command, content associated with the selected environment is retrieved from a content source at step 220, e.g., by retrieving content from memory such as memory 130 of Figure 2, from a server (e.g., at a remote head-end location), or from other source or sources. At step 230, the content is directed to various devices to produce displays and effects necessary to implement the selected environment. For example, at step 240, video content may be displayed on video walls of the ARENV to provide primary visual background and features necessary to create the virtual environment. Other content may control devices such as wearables worn by a user within the ARENV, e.g., a HMD, at step 250. The control system also monitors various sensors at step 260 to obtain feedback from users that may be provided to the control system and/or content source and/or other control functions of the ARENV, wearables or other devices, to adjust parameters of the ARENV and adapt the virtual experience in accordance with a user's actions, e.g., a direction that a user is looking and/or movements made by a user.

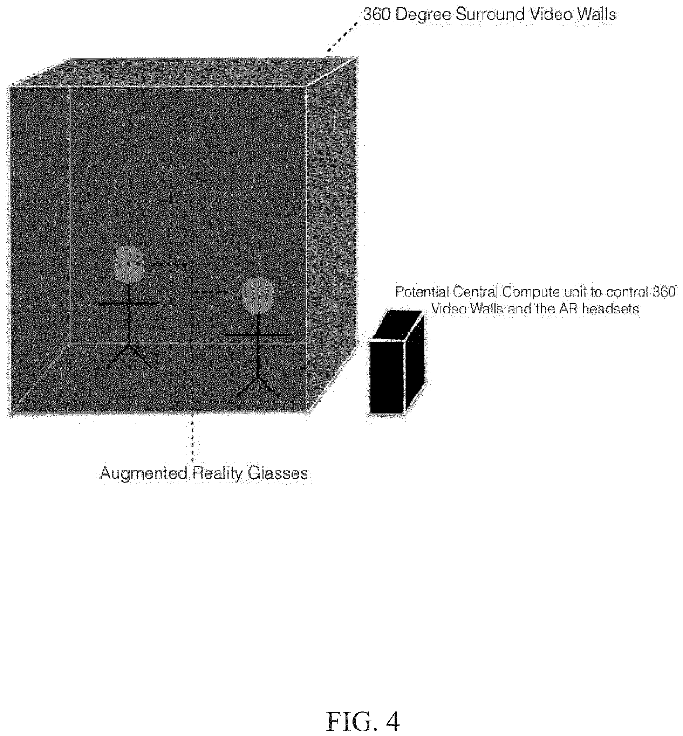

Figure 4 illustrates an exemplary embodiment in accordance with the present principles. In Figure 4, two users wearing AR glasses are within an ARENV comprising video walls providing 360-degree video surrounding the users. A central compute or control unit controls both the video walls and the AR headsets to create an alternative reality environment in accordance with the present principles.

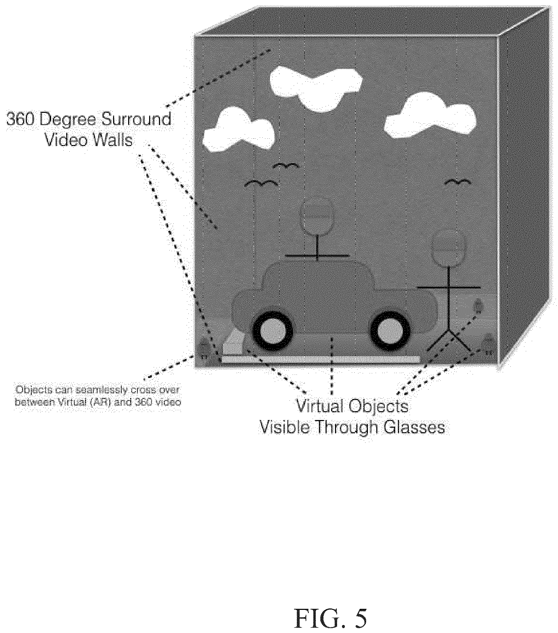

Figures 5, 6 and 7 illustrate various exemplary embodiments in accordance with the present principles. For example, these figures show two users within an ARENV and the users are wearing AR glasses or headsets. Video walls surround the users. The AR glasses or headsets enable users to see virtual objects in the ARENV. A central compute or control unit controls both the video walls and the AR headsets to create an exemplary alternative reality environment corresponding to an outdoor environment. In addition, the control system operates in accordance with the present principles to enable the virtual objects to appear to move seamlessly between the virtual space in the ARENV and the walls of the ARENV. That is, the objects may move throughout the ARENV seamlessly.

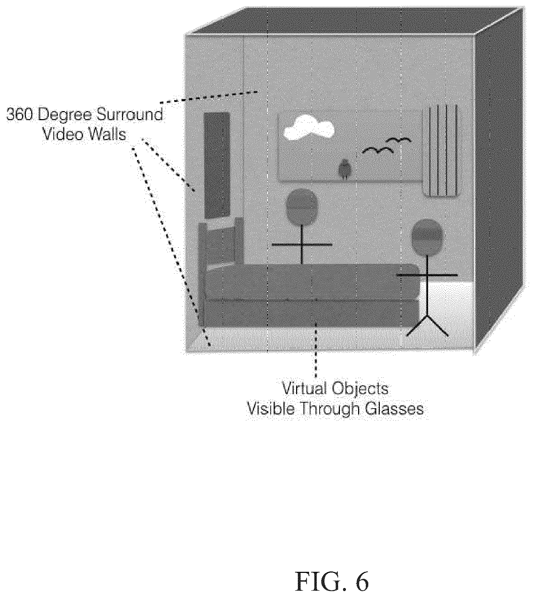

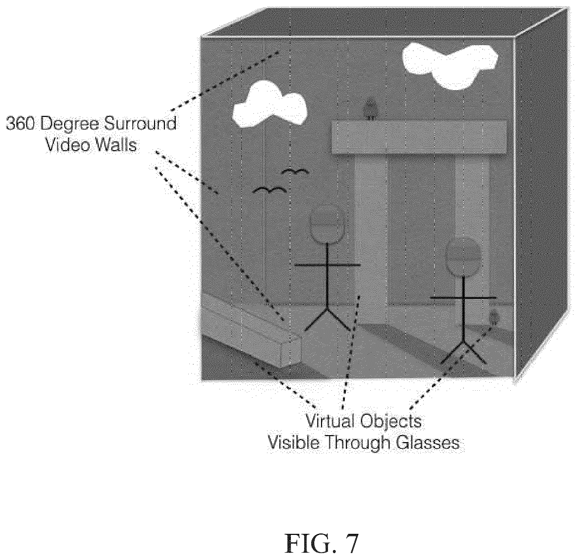

Figures 5 and 7 show exemplary outdoor environments with various virtual objects included in the environment. Figure 6 illustrates an exemplary indoor environment such as a room of a house having a window looking outdoors.

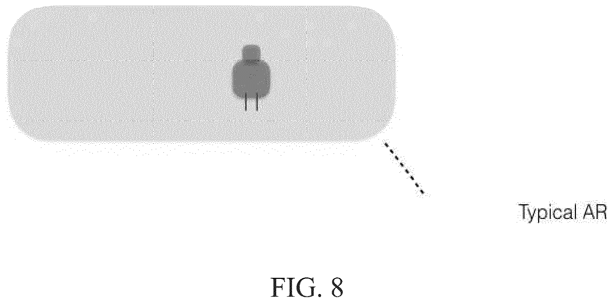

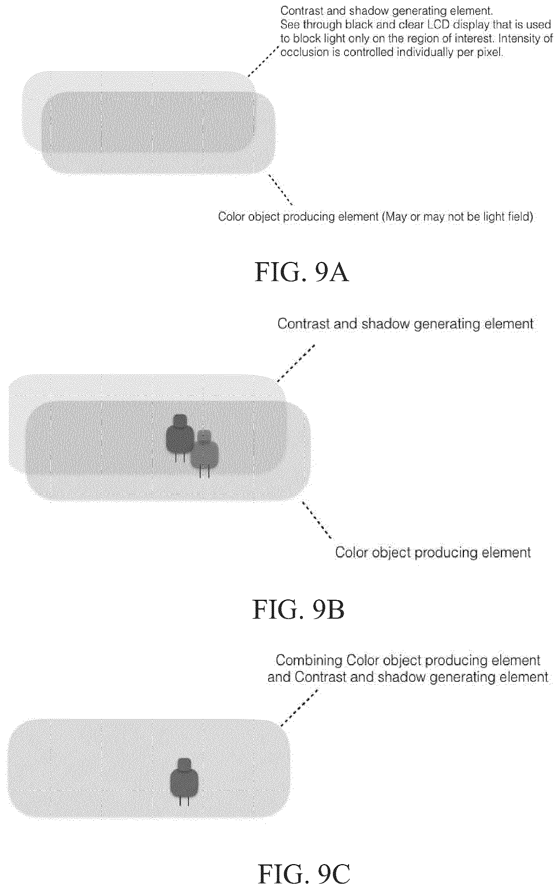

Figures 8 and 9 illustrate aspects of an exemplary embodiment of AR glasses or an AR headset in accordance with the present principles and suitable for use with an ARENV as described herein. Figure 8 shows a view of a virtual object that may be visible through AR glasses or headset. Figures 9A, 9B and 9C illustrate an exemplary embodiment of AR glasses including two layers or elements in the display region of the glasses or headset. A first layer provides a display of an object in color. A second layer provides additional contrast and shadows with respect to objects displayed by the first layer. Both layers may be controlled by a control system in accordance with the principles described herein to provide enhanced contrast and shadows associated with virtual objects thereby improving the realism of such virtual objects seen by a user in the glasses or headset.

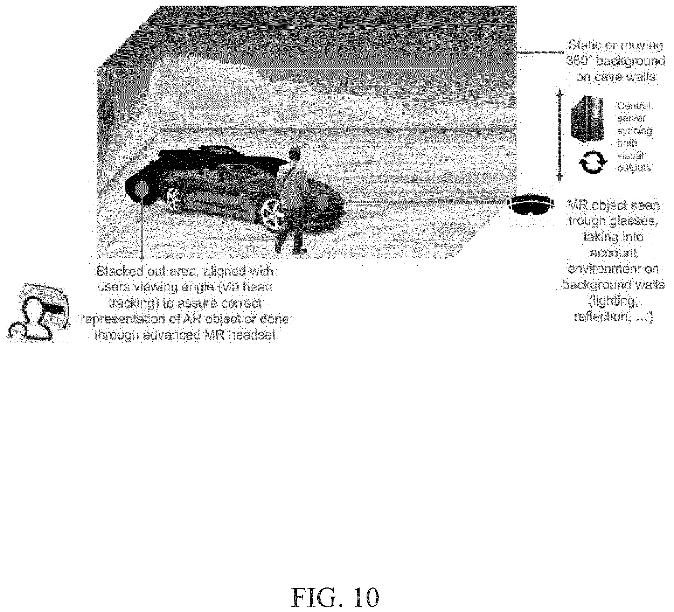

Figures 10, 11 and 12 illustrate additional exemplary embodiments in accordance with the present principles. Figure 10 shows a user within an ARENV providing an outdoor environment that appears to include an automobile that is a virtual object. The environment may be moving or static. For example, in the exemplary embodiment of Figure 10, the water in the distance might be moving (e.g., waves) and/or trees may appear to be moving in the wind and/or one or more virtual objects such as the illustrated automobile may be moving. Certain aspects or features of a virtual object such as an automobile may be provided by the ARENV, e.g., the video walls, while other aspects may be provided via wearable equipment worn by a user such as AR glasses or a headset. For example, in Figure 10, video walls of the ARENV provide representations of the outdoor environment. In addition, the video walls may provide or display features such as shadows that are associated with virtual objects such as the illustrated automobile. A headset or glasses may display or provide a representation of the car and/or features such as some or all of the illustrated shadows. The features provided by the ARENV and wearable devices are determined and controlled by the control system based on factors such as the alternative involved, the virtual object or objects involved, the direction a user is looking, a user's position with respect to a virtual object, etc. In addition, the control system synchronizes and coordinates the visual outputs of all devices involved, e.g., both the ARENV and wearable devices, taking into account factors such as those mentioned above to enhance realism of the experience and the virtual objects involved.

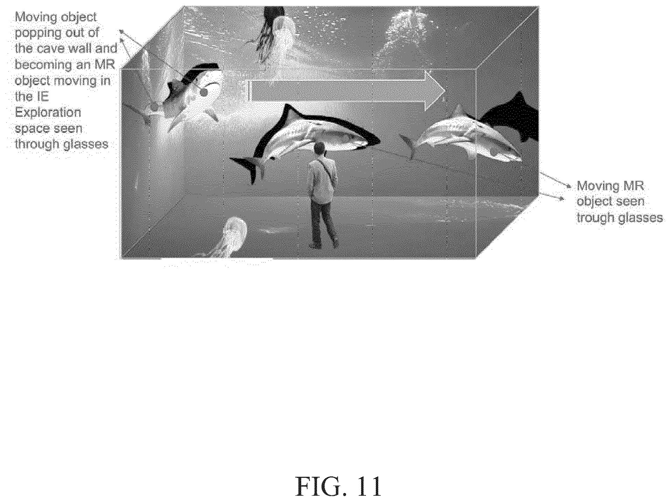

Figure 11 illustrates an exemplary embodiment incorporating aspects in accordance with the present principles as described above in regard to Figure 10. In Figure 11, a user in an ARENV experiences an exemplary virtual underwater setting including, for example, virtual sharks that appear to move out of the walls of the ARENV, into the space occupied by the user, and past the user into an opposite wall. As in Figure 10, the control system controls both the ARENV, e.g., display of video content on video walls of the ARENV, and other devices such as glasses worn by the user to coordinate and synchronize displayed aspects and features of both the virtual environment and virtual objects in the environment to enhance realism of the experience.

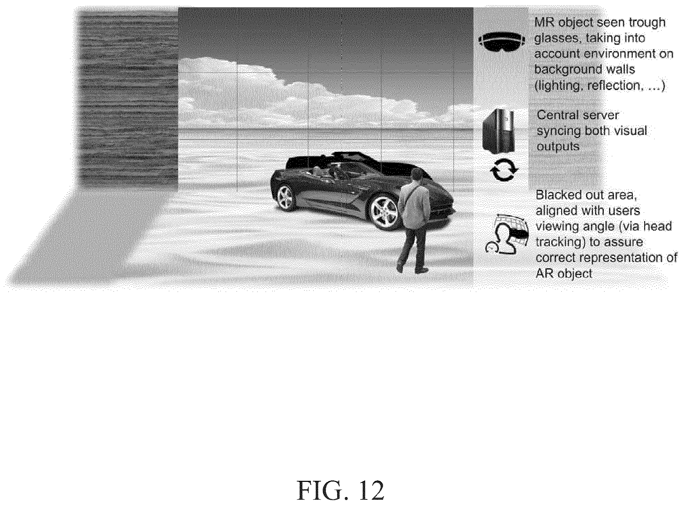

Figure 12 shows another exemplary embodiment in accordance with the present principles. Figure 12 illustrates an outdoor environment and features similar to those shown in Figure 10. However, in Figure 12, rather than a 360-degree ARENV surrounding a user, an exemplary embodiment incorporating two video walls is shown. One wall is in front of the user. A second wall is actually the floor beneath the user's feet. Various configurations of an ARENV utilizing one or more video walls are contemplated and in accordance with the present principles. An ARENV configuration may vary depending on the particular application. For example, a 360-degree environment such as in Figure 10 may be appropriate for a dedicated space such as a theater in a cinema or an advertising space in a commercial establishment, e.g., a car dealer might utilize a 360-degree space such as in Figure 10 to enable a customer to experience a new model of an automobile. Other applications, such as in a home, may dictate a less extensive or less complex space such as in Figure 12 based on limitations such as cost or available space.

Figured 13, 14A and 14B show exemplary embodiments and features for various applications in accordance with the present principles and incorporating various features described above.

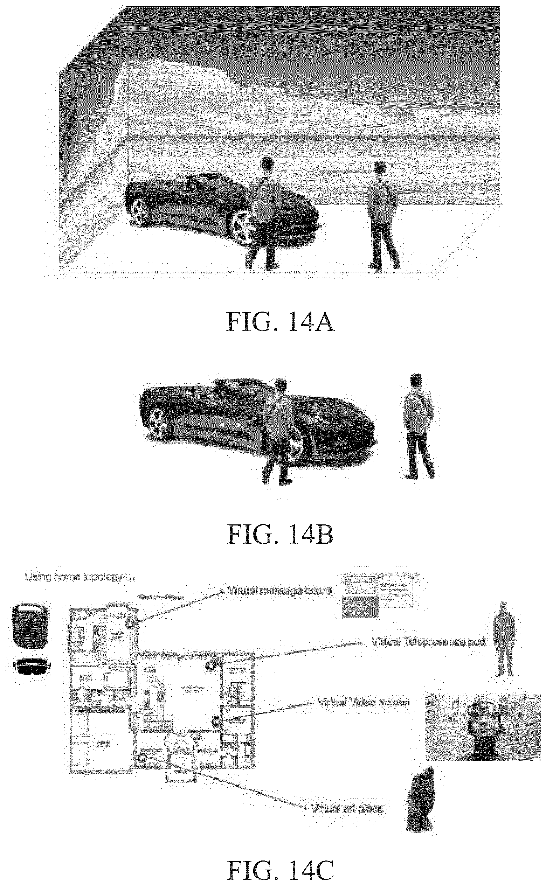

Figure 14C shows an exemplary embodiment in a home environment in accordance with the present principles. In Figure 14C, the present principles may be used to enable virtual objects in a home, e.g., a virtual art piece, a virtual video screen, etc. That is, the present principles enable adapting an environment such as a home to include virtual features desirable to a user or homeowner and, in addition, to change or modify such features at will based on content available to a control system as described above and capabilities of the control system.

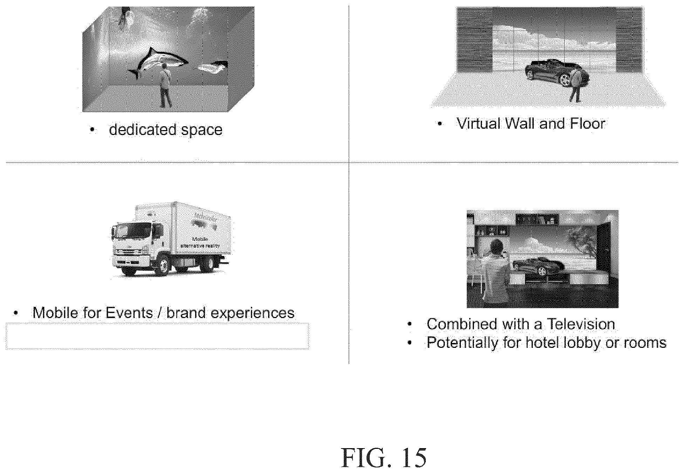

Figure 15 illustrates another representation of exemplary embodiments of various configurations of an ARENV in accordance with the present principles. Such exemplary embodiments are contemplated as including but not being limited to a dedicated space such as a 360-degree space, a virtual wall and floor, a mobile configuration (e.g., a 360-degree space in a vehicle), and combined with other display devices, e.g., a television, in spaces such as a hotel lobby or room.

In accordance with the present principles, another aspect involves what may be referred to herein as "large field-of-view content" where the field-of-view involved may be up to 360°. A large field-of-view content may be provided or produced in various ways such as, for example, a three-dimension computer graphic imagery scene (3D CGI scene), a point cloud, an immersive video, or others described herein such as an ARENV described above. Many terms may be used in regard to such immersive videos such as, for example, virtual Reality (VR), 360, panoramic, 4π, steradians, immersive, omnidirectional, large field of view.

Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

An immersive video typically refers to a video encoded on a rectangular frame that is a two-dimension array of pixels (i.e. element of color information) like a "regular" video. In many implementations, the following processes may be performed. To be rendered, the frame is, first, mapped on the inner face of a convex volume, also referred to as mapping surface (e.g. a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, various mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. There is a lack of taking specificities of immersive videos into account in encoding and decoding methods. Indeed, as immersive videos are 360° videos, a panning, for example, introduces motion and discontinuities that require a large amount of data to be encoded while the content of the scene does not change. Taking immersive videos specificities into account while encoding and decoding video frames would bring valuable advantages to the state-of-art methods.

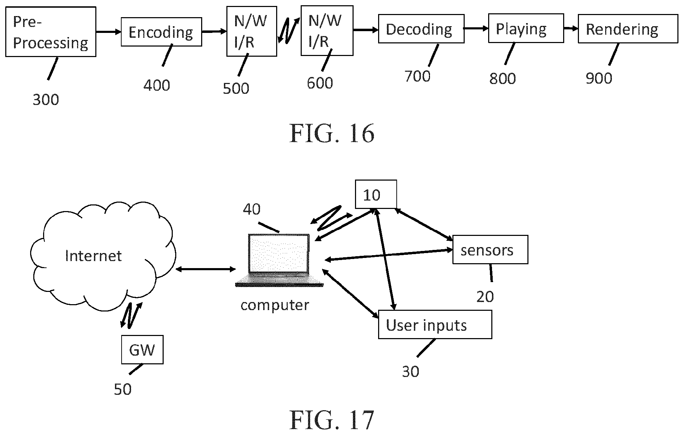

Figure 16 schematically illustrates a general overview of an encoding and decoding system according to one or more embodiments. The system of Figure 16 is configured to perform one or more functions. A pre-processing module 300 may be provided to prepare the content for encoding by an encoding device 400. The pre-processing module 300 may perform multi-image acquisition, merging of the acquired multiple images in a common space (typically a 3D sphere if directions are encoded), and mapping of the 3D sphere into a 2D frame using, for example, but not limited to, an equirectangular mapping or a cube mapping. The pre-processing module 300 may also acquire an omnidirectional video in a particular format (for example, equirectangular) as input, and pre-process the video to change the mapping into a format more suitable for encoding. Depending on the acquired video data representation, the pre-processing module 300 may perform a mapping space change. After being encoded, the data, which may be encoded immersive video data or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

Various types of systems may be envisaged to perform functions of an immersive display device, for rendering an immersive video for example decoding, playing and rendering.

Embodiments of a system, for processing augmented reality, virtual reality, or augmented virtuality content are illustrated in Figures 17 to 24. Such systems are provided with one or more processing functions and include an immersive video rendering device which may be a head-mounted display (HMD), a tablet or a smartphone for example, and optionally include one or sensors. The immersive video rendering device may also include interface modules between the display device and one or more modules performing the processing functions. The processing functions may be integrated into the immersive video rendering device or performed by one or more processing devices. Such a processing device may include one or more processors and a communication interface with the immersive video rendering device, such as a wireless or wired communication interface.

The processing device may also include a communication interface with a wide access network such as the Internet and access content located on a cloud, directly or through a network device such as a home or a local gateway. The processing device may also access a local storage device through an interface such as a local access network interface, for example, an Ethernet type interface. In an embodiment, the processing device may be provided in a computer system having one or more processing units. In another embodiment, the processing device may be provided in a smartphone which can be connected by a wired link or a wireless link to the immersive video rendering device. The smart phone may be inserted in a housing in the immersive video rendering device and communicate with the immersive video rendering device by a wired or wireless connection. A communication interface of the processing device may include a wireline interface (for example a bus interface, a wide area network interface, a local area network interface) or a wireless interface (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system includes an auxiliary device which communicates with the immersive video rendering device and with the processing device. In such an embodiment, the auxiliary device may perform at least one of the processing functions.

The immersive video rendering device may include one or more displays. The device may employ optics such as lenses in front of each display. The display may also be a part of the immersive display device such as for example in the case of smartphones or tablets. In another embodiment, displays and optics may be embedded in a helmet, in glasses, or in a wearable visor. The immersive video rendering device may also include one or more sensors, as described later. The immersive video rendering device may also include interfaces or connectors. It may include one or more wireless modules in order to communicate with sensors, processing functions, handheld or devices or sensors related to other body parts.

The immersive video rendering device may also include processing functions executed by one or more processors and configured to decode content or to process content. By processing content here, it is understood functions for preparing content for display. This may include, for instance, decoding content, merging content before displaying it and modifying the content according to the display device.

One function of an immersive content rendering device is to control a virtual camera which captures at least a part of the content structured as a virtual volume. The system may include one or more pose tracking sensors which totally or partially track the user's pose, for example, the pose of the user's head, in order to process the pose of the virtual camera. One or more positioning sensors may be provided to track the position, movement and/or displacement of the user. The system may also include other sensors related to the environment for example to measure lighting, temperature or sound conditions. Such sensors may also be related to the body of a user, for instance, to detect or measure biometric characteristics of a user such as perspiration or heart rate. The system may also include user input devices (e.g. a mouse, a keyboard, a remote control, a joystick). Sensors and user input devices communicate with the processing device and/or with the immersive rendering device through wired or wireless communication interfaces. Information from the sensors and/or user input devices may be used as parameters to control processing or providing of the content, manage user interfaces or to control the pose of the virtual camera. For example, such information or parameters may be used to determine reaction of a user to content (e.g., excitement or fear based on increased heart rate or sudden movement) that may be useful to facilitate implementation of features such as selection of content of interest to a user, placement or movement of virtual objects, etc.

Embodiments of a first type of system for displaying augmented reality, virtual reality, augmented virtuality or any content from augmented reality to virtual reality will be described with reference to Figures 17 to 21.

Figure 17 schematically illustrates an embodiment of a system configured to decode, process and render immersive videos. The system includes an immersive video rendering device 10, one or sensors 20, one or more user input devices 30, a computer 40 and a gateway 50 (optional).

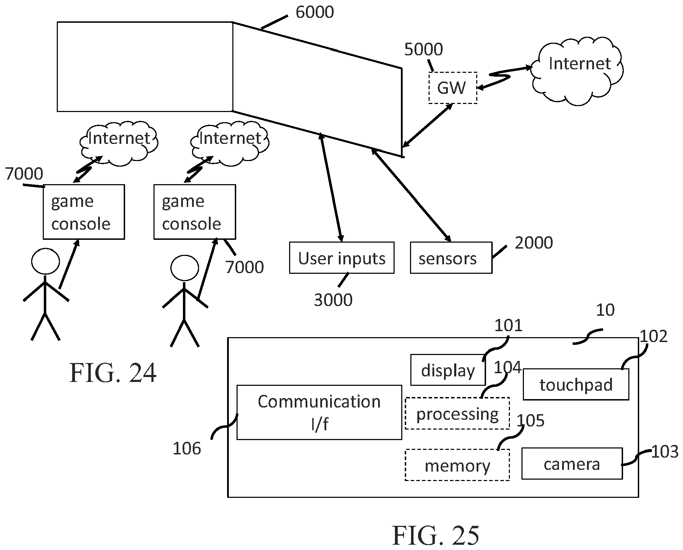

An embodiment of the immersive video rendering device 10, will be described in more detail with reference to Figure 25. The immersive video rendering device includes a display 101. The display is, for example an OLED or LCD type display. The immersive video rendering device 10 is, for instance a HMD, a tablet or a smartphone. The device 10 may include a touch sensitive surface 102 (e.g. a touchpad or a tactile screen), a camera 103, a memory 105 in connection with at least one processor 104 and at least one communication interface 106. The at least one processor 104 processes the signals received from the sensor(s) 20. Some of the measurements from sensors are used to compute the pose of the device and to control the virtual camera. Sensors which may be used for pose estimation include, for instance, gyroscopes, accelerometers or compasses. In more complex systems, a rig of cameras for example may also be used. The at least one processor 104 performs image processing to estimate the pose of the device 10. Some other measurements may be used to process the content according to environmental conditions or user reactions. Sensors used for detecting environment and user conditions include, for instance, one or more microphones, light sensor or contact sensors. More complex systems may also be used such as, for example, a video camera tracking eyes of a user. In such a case the at least one processor performs image processing to perform the expected measurement. Data from sensor(s) 20 and user input device(s) 30 may also be transmitted to the computer 40 which will process the data according to the input of the sensors.

Memory 105 includes parameters and code program instructions for the processor 104. Memory 105 may also include parameters received from the sensor(s) 20 and user input device(s) 30. Communication interface 106 enables the immersive video rendering device to communicate with the computer 40. The Communication interface 106 of the processing device may include a wireline interface (for example a bus interface, a wide area network interface, a local area network interface) or a wireless interface (such as a IEEE 802.11 interface or a Bluetooth® interface). Computer 40 sends data and optionally control commands to the immersive video rendering device 10. The computer 40 processes the data, for example, to prepare the data for display by the immersive video rendering device 10. Processing may be carried out exclusively by the computer 40 or part of the processing may be carried out by the computer and part by the immersive video rendering device 10. The computer 40 may be connected to the Internet, either directly or through a gateway or network interface 50. The computer 40 receives data representative of an immersive video from the Internet and/or another source, processes these data (e.g., decodes the data and may prepare the part of the video content that is going to be displayed by the immersive video rendering device 10) and sends the processed data to the immersive video rendering device 10 for display. In another embodiment, the system may also include local storage (not shown) where the data representative of an immersive video are stored. The local storage may be included in computer 40 or on a local server accessible through a local area network for instance (not shown).

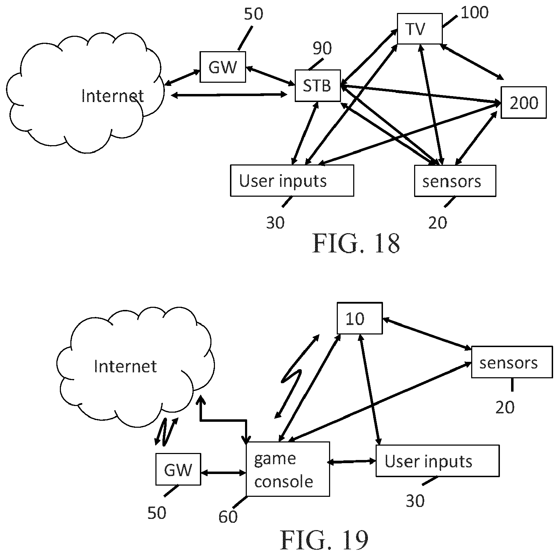

Figure 18 schematically represents a second embodiment of a system configured to decode, process and render immersive videos. In this embodiment, a STB 90 is connected to a network such as internet directly (i.e. the STB 90 includes a network interface) or via a gateway 50. The STB 90 is connected through a wireless interface or through a wired interface to a rendering device such as a television set 100 or an immersive video rendering device 200. In addition to classic functions of a STB, STB 90 includes processing functions to process video content for rendering on the television 100 or on any immersive video rendering device 200. These processing functions are similar to the processing functions described for computer 40 and are not described again here. Sensor(s) 20 and user input device(s) 30 are also of the same type as the sensor(s) and input device(s) described earlier with reference to Figure 17. The STB 90 obtains the data representative of the immersive video from the internet. In another embodiment, the STB 90 obtains the data representative of the immersive video from a local storage (not shown) where the data representative of the immersive video are stored.

Figure 19 schematically represents a third embodiment of a system configured to decode, process and render immersive videos. In the third embodiment a game console 60 processes the content data. Game console 60 sends data and optionally control commands to the immersive video rendering device 10. The game console 60 is configured to process data representative of an immersive video and to send the processed data to the immersive video rendering device 10 for display. Processing may be done exclusively by the game console 60 or part of the processing may be done by the immersive video rendering device 10.

The game console 60 is connected to internet, either directly or through a gateway or network interface 50. The game console 60 obtains the data representative of the immersive video from the internet. In another embodiment, the game console 60 obtains the data representative of the immersive video from a local storage (not shown) where the data representative of the immersive video is stored. The local storage may be on the game console 60 or on a local server accessible through a local area network for instance (not shown).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use the received data for processing of the data representative of an immersive video obtained from the internet or from the from the local storage.

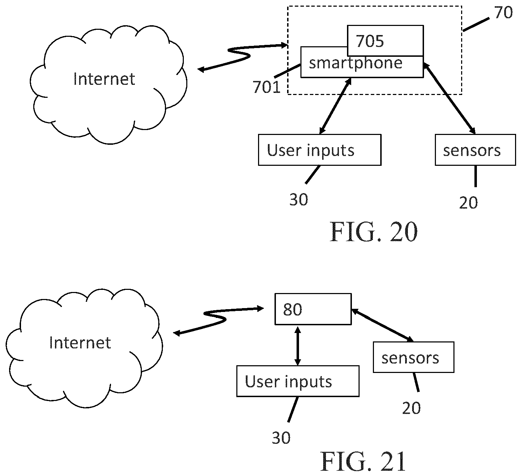

Figure 20 schematically represents a fourth embodiment of a system configured to decode, process and render immersive videos the immersive video rendering device 70 is provided by a smartphone 701 inserted in a housing 705. The smartphone 701 may be connected to internet and thus may obtain data representative of an immersive video from the internet. In another embodiment, the smartphone 701 obtains data representative of an immersive video from a local storage (not shown) where the data representative of an immersive video are stored. The local storage may be on the smartphone 701 or on a local server accessible through a local area network for instance (not shown).

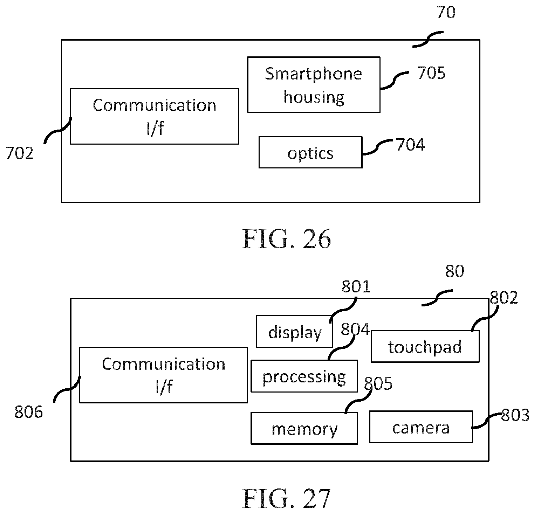

An embodiment of the immersive video rendering device 70 is described with reference to Figure 26. The immersive video rendering device 70 optionally includes at least one network interface 702 and housing 705 for the smartphone 701. The smartphone 701 includes functions of a smartphone and a display. The display of the smartphone is used as the immersive video rendering device 70 display. Optics 704, such as lenses, may be included for viewing the data on the smartphone display. The smartphone 701 is configured to process (for example, decode and prepare for display) data representative of an immersive video for example according to data received from the sensors 20 and from user input devices 30. Some of the measurements from sensors may be used to compute the pose of the device and to control the virtual camera. Sensors which may be used for pose estimation include, for instance, gyroscopes, accelerometers or compasses. More complex systems, for example a rig of cameras may also be used. In this case, the at least one processor performs image processing to estimate the pose of the device 10. Other measurements may be used to process the content according to environmental conditions or user reactions, for example. Sensors used for detecting environmental and users conditions include, for instance, microphones, light sensor or contact sensors. More complex systems may also be used such as, for example, a video camera tracking eyes of a user. In such case the at least one processor performs image processing to perform the measurement.

Figure 21 schematically represents a fifth embodiment of the first type of system in which the immersive video rendering device 80 includes functionalities for processing and displaying the data content. The system includes an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not shown) where the data representative of an immersive video is stored. The local storage may be provided on the rendering device 80 or on a local server accessible through a local area network for instance (not shown).

An embodiment of immersive video rendering device 80 is illustrated in Figure 27. The immersive video rendering device includes a display 801, for example an OLED or LCD type display, a touchpad (optional) 802, a camera (optional) 803, a memory 805 in connection with at least one processor 804 and at least one communication interface 806. Memory 805 includes parameters and code program instructions for the processor 804. Memory 805 may also include parameters received from the sensors 20 and user input devices 30. Memory 805 may have a large enough capacity to store data representative of the immersive video content. Different types of memories may provide such a storage function and include one or more storage devices such as a SD card, a hard disk, a volatile or non-volatile memory, etc. Communication interface 806 enables the immersive video rendering device to communicate with internet network. The processor 804 processes data representative of the video to display images on display 801. The camera 803 captures images of the environment for an image processing step. Data are extracted from this step to control the immersive video rendering device.

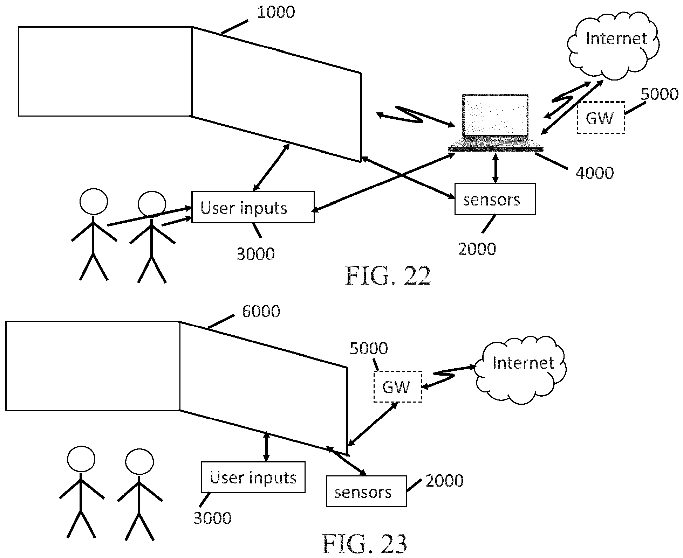

Embodiments of a second type of system, for processing augmented reality, virtual reality, or augmented virtuality content are illustrated in Figures 22 to 24. In these embodiments the system includes an immersive wall.

Figure 22 schematically represents an embodiment of the second type of system including a display 1000 - an immersive (projective) wall which receives data from a computer 4000. The computer 4000 may receive immersive video data from the internet. The computer 4000 can be connected to internet, either directly or through a gateway 5000 or network interface. In another embodiment, the immersive video data are obtained by the computer 4000 from a local storage (not shown) where data representative of an immersive video are stored. The local storage may be in the computer 4000 or in a local server accessible through a local area network for instance (not shown).

This system may also include one or more sensors 2000 and one or more user input devices 3000.The immersive wall 1000 may be an OLED or LCD type and may be equipped with one or more cameras. The immersive wall 1000 may process data received from the more or more sensors 2000. The data received from the sensor(s) 2000 may, for example, be related to lighting conditions, temperature, environment of the user, such as for instance, position of objects.

The immersive wall 1000 may also process data received from the one or more user input devices 3000. The user input device(s) 3000 may send data such as haptic signals in order to give feedback on the user emotions. Examples of user input devices 3000 include for example handheld devices such as smartphones, remote controls, and devices with gyroscope functions.

Data may also be transmitted from sensor(s) 2000 and user input device(s) 3000 data to the computer 4000. The computer 4000 may process the video data (e.g. decoding them and preparing them for display) according to the data received from these sensors/user input devices. The sensors signals may be received through a communication interface of the immersive wall. This communication interface may be of Bluetooth type, of WIFI type or any other type of connection, preferentially wireless but may also be a wired connection.

Computer 4000 sends the processed data and, optionally, control commands to the immersive wall 1000. The computer 4000 is configured to process the data, for example prepare the data for display by the immersive wall 1000. Processing may be done exclusively by the computer 4000 or part of the processing may be done by the computer 4000 and part by the immersive wall 1000.

Figure 23 schematically represents another embodiment of the second type of system. The system includes an immersive (projective) wall 6000 which is configured to process (for example decode and prepare data for display) and display the video content and further includes one or more sensors 2000, and one or more user input devices 3000.

The immersive wall 6000 receives immersive video data from the internet through a gateway 5000 or directly from internet. In another embodiment, the immersive video data are obtained by the immersive wall 6000 from a local storage (not shown) where the data representative of an immersive video are stored. The local storage may be in the immersive wall 6000 or in a local server accessible through a local area network for instance (not shown).

This system may also include one or more sensors 2000 and one or more user input devices 3000.The immersive wall 6000 may be of OLED or LCD type and be equipped with one or more cameras. The immersive wall 6000 may process data received from the sensor(s) 2000 (or the plurality of sensors 2000). The data received from the sensor(s) 2000 may for example be related to lighting conditions, temperature, environment of the user, such as position of objects.

The immersive wall 6000 may also process data received from the user input device(s) 3000. The user input device(s) 3000 send data such as haptic signals in order to give feedback on the user emotions. Examples of user input devices 3000 include for example handheld devices such as smartphones, remote controls, and devices with gyroscope functions.

The immersive wall 6000 may process the video data (e.g. decoding them and preparing them for display) according to the data received from these sensor(s)/user input device(s). The sensor signals may be received through a communication interface of the immersive wall. This communication interface may include a Bluetooth type, a WIFI type or any other type of wireless connection, or any type of wired connection. The immersive wall 6000 may include at least one communication interface to communicate with the sensor(s) and with the internet.

Figure 24 illustrates another embodiment in which an immersive wall is used for gaming. One or more gaming consoles 7000 are connected, for example through a wireless interface to the immersive wall 6000. The immersive wall 6000 receives immersive video data from the internet through a gateway 5000 or directly from internet. In an alternative embodiment, the immersive video data are obtained by the immersive wall 6000 from a local storage (not shown) where the data representative of an immersive video are stored. The local storage may be in the immersive wall 6000 or in a local server accessible through a local area network for instance (not shown).

Gaming console 7000 sends instructions and user input parameters to the immersive wall 6000. Immersive wall 6000 processes the immersive video content, for example, according to input data received from sensor(s) 2000 and user input device(s) 3000 and gaming console(s) 7000 in order to prepare the content for display. The immersive wall 6000 may also include internal memory to store the content to be displayed.

In accordance with the present principles, another aspect involves an embodiment comprising a mixed reality domain where a virtual object is displayed by an individual projection system, usually AR glasses or other head mounted display (HMD) worn by a user in a physical space while the viewer is sharing the physical space with one or more other users wherein each user or viewer may also be wearing AR glasses or HMD. An exemplary embodiment may include one or more configurations where the physical space is a cave-like space or a room with at least one video wall on which content such as a moving picture is displayed. One example of such spaces is, e.g., a CAVE Automatic Virtual Environment (CAVE) such as those produced by Visbox ,Inc. In the following, the combination of AR headset and a space or room in accordance with the present principles will be referred to generally as an AR cave or AR environment (ARENV) as described elsewhere herein.

Another aspect relates to Optical See-Through headsets where content of the environment that is real such as objects in the environment or that may be deemed to be real, e.g., content displayed on a wall of an environment such as an ARENV where a user is present, is made visible through a transparent optic while the virtual object is projected in the air through a projector that displays a stereoscopic hologram for the left and right eyes. Given the additive nature of the light, the projected picture looks like a hologram where the virtual object is semi-transparent and the real background is not fully blocked or occluded by the virtual object. An aspect of the present principles involves improving an apparent opacity of a virtual object.

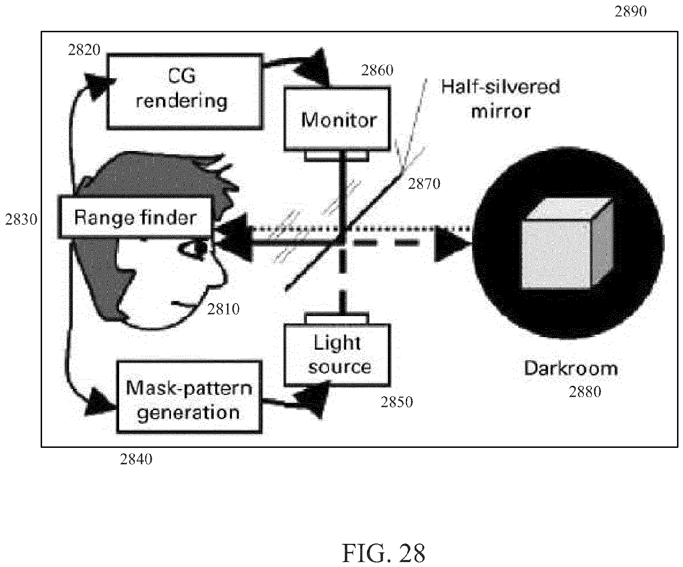

Figure 28 shows an exemplary embodiment of a system 2890 including a headset worn by a user 2810 positioned within a physical space 2880. In Figure 28, user 2810 wears glasses or HMD that may include one or more processors 2820 for producing and rendering content representing objects or computer generated (CG) objects or, in general, computer generated imagery (CGI). CGI may then be displayed on a monitor 2860 (e.g., LED display) included in the headset. The user may be located in a physical space such as a darkened room 2880 having one or more video display walls displaying content and providing an ARENV. System control, e.g., control 130 in Figure 1, may be in communication (e.g.., wired and/or wireless) with both the user's headset and the ARENV to coordinate display of CGI in the headset with the content displayed on the video wall or walls of the ARENV. The headset may include additional features such as range finder 2830 and/or other sensors to determine position, placement and/or movement of the user within the ARENV. Such information may be used, for example, as inputs to the production of CGI by processor or processors 2820 to control the placement, movement, size, orientation, etc., of the CGI as seen by the user. The headset or HMD device may also include a semi-transparent surface such as half-silvered mirror 2870 positioned to reflect images of content such as CGI produced by display 2860 into the eyes of user 2810 while also enabling user 2810 to see through surface 2870 and view content displayed on a video wall or walls of space 2880. In accordance with an aspect of the present principles, the headset or HMD worn by user 2810 may also include mask pattern generator 2840 and light source 2850 operating as explained below in more detail. It will be apparent to one skilled in the art that the processing capability described in regard to Figure 28 such as that provided by features 2820 and 2840 shown in Figure 28 may be included partially or completely within a headset worn by a user. Any processing capability not included within the headset may be located elsewhere or distributed among one or more other devices not shown in Figure 28 such as in a device carried by the user (e.g., a mobile phone, tablet, etc.) and/or in a computer, server or processor not worn by the user. In the case of such distributed processing, the various processors may communicate via various means such a wired and or wireless communication protocols and the headset or HMD can include interface or communication devices or modules (not shown in Figure 28) required to enable such wired or wireless communication.

Various approaches may be used to make virtual objects appear more opaque or solid. Examples of such approaches include: 1) block light or cut light rays off between the light source and objects, 2) block or cut rays off by providing real counterparts of the virtual objects, 3) block or cut rays off between the objects and a user's eyes, and 4) decrease the visibility of the real object or scene by increasing the relative intensity of the synthetic or CGI image. In accordance with an aspect of the present principles, an exemplary embodiment includes blocking or cutting off rays between a light source and a real object represented by content displayed, e.g., on a video wall such as a single wall that a user is facing within a room or on one or more walls of an ARENV such as one described herein including six sides or video walls where a user may be completely immersed in an alternative reality environment, or other environments.

Exemplary environments providing real content or objects are illustrated in Figure 15. References to "real" content or objects herein may refer to content or objects displayed on a display wall or walls of an ARENV such as those illustrated in the upper left and upper right images of Figure 15 as opposed to virtual objects displayed in a headset that appear to float in space within the ARENV or "pop" out of the display walls of an ARENV. In the case of a dedicated ARENV such as those illustrated in the upper left and upper right images in Figure 15, technique (1) described in the preceding paragraph may be implemented by generating and displaying a black silhouette or mask on the video display panel or wall at the right position according to the headset position and orientation to replace the content on the video wall or walls that a user would usually see through the virtual object with black. Referring to the upper images in Figure 15, if a viewer sees a virtual shark (upper left of Figure 15) or a virtual car (upper right of Figure 15) appear in the user's headset as objects appearing to "pop" out of the screen or walls of the ARENV, then by providing a black mask positioned on the screen or walls behind the virtual objects from the user's perspective then the user can experience virtual objects (e.g., shark or car) that appear to be full and solid objects.

In accordance with an aspect of the present principles, an embodiment improves an opacity of a virtual object for multiple users within an ARENV, each wearing headsets or HMDs, and all are simultaneously engaged in a virtual experience being provided within the ARENV. In a multi-user situation, visual artifacts may occur for one or more users and adversely affect the realism of the virtual reality experience. For example, multiple users all see the video wall content. A black mask included in the content and positioned to appear behind a virtual object in one HMD for the perspective of that one HMD may not be properly positioned from the perspective of one or more other users. As a result, the one or more other users may see all or a portion of the black mask as a visible artifact in the content. Seeing a black mask artifact among the content displayed within an ARENV may produce a significant negative impact on the quality of experience for each viewer that sees the black mask.

As explained in detail below, in accordance with the present principles an embodiment addressing the described problem comprises provide image information to a wearable display device to produce a displayed image on a surface of the wearable display device that includes a first computer generated image (CGI) and a second CGI, wherein the first CGI represents a virtual object in a first position in the displayed image to coincide with a first shadow image included in a background display visible through the surface; and the second CGI represents an image corresponding to the background display and in as second position in the displayed image to hide a portion of a second shadow image included in the background display.

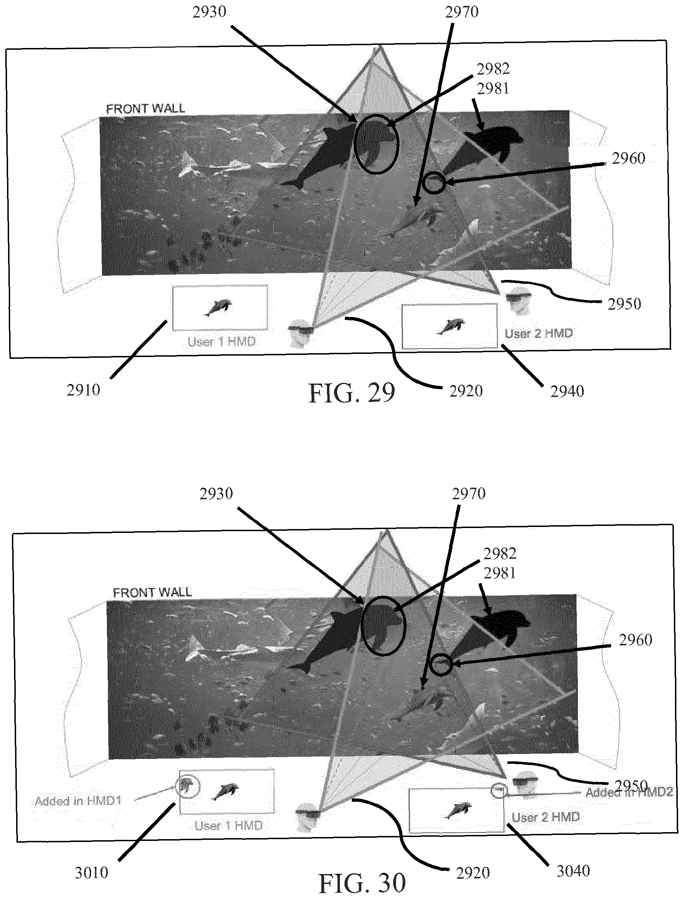

Figure 29 illustrates the described creation of mask-related artifacts. In Figure 29, a first user, USER1, is located at the left of center of, and facing, a video wall labeled "FRONT WALL" in Figure 29 and is wearing HMD1. USER1 has a field of view (FOV) 2920. A second user, USER2, is located toward the right side of, and facing, the video wall and is wearing HMD2. USER2 has a FOV 2950. Each user sees in their HMD a virtual object, e.g., a dolphin, 2970 appearing in their field of view. The HMD displays seen by USER1 and USER2 are illustrated by images 2910 and 2940, respectively, in Figure 29. Similarly, USER2's HMD display is illustrated in Figure 29 by image 2940. To increase the opacity of object 2970 for USER1 and for USER2, two masks 2981 and 2982 are included in the content displayed on the video wall and sized and positioned to appear to coincide with, i.e., be in back of, object 2970 as seen from the perspective of each user. That is, mask 2981 is within the FOV of USER1 and positioned to increase the opacity of object 2970 in HMD! for USER1. Mask 2982 is within the FOV of USER2 and positioned to increase the opacity of object 2970 in HMD2 for USER2. However, the respective positions of USER1 and USER2 in front of the video wall and with respect to display of masks 2981 and 2982 results in a portion of each mask appearing in the HMD of the other user. More specifically, for USER1, portion 2930 of mask 2982 is within the FOV of USER1 and would appear as an artifact in the upper left corner of the display HMD1. For USER2, a portion 2960 of mask 2981 would appear as an artifact in the upper right corner of the display of HMD2.

In accordance with an aspect of the present principles, an exemplary embodiment provides for improving the apparent solidity or opacity of virtual objects for a multi-user case while eliminating or reducing associated artifacts that might be visible by one or more users as illustrated in Figure 30. In Figure 30, a portion of the content intended for display on the video wall is displayed on the display of each user's HMD as required to block or hide the mask artifact in each display, thereby enabling a user to see real content that should be visible to the user through the semi-transparent surface in each HMD instead of the black mask. That is, the effect of the black mask artifact is hidden, blocked, masked or canceled by displaying in the HMD a portion of the real content that coincides with each artifact from the perspective of each user. In Figure 30, for USER 1, a portion of the video-wall content corresponding to the content masked by portion 2930 of mask 2982 is displayed in the upper left corner of the display HMD 1 as shown by image 3010 in Figure 30. For USER2, a portion of the video-wall content corresponding to the content masked by portion 2960 of mask 2981 is displayed in the upper right corner of the display of HMD2 as shown by image 3040 in Figure 30. Thus, portions of video-wall content that are not displayed on the video wall due to the black masks are displayed instead in each of the HMD displays, thereby hiding the mask artifacts that would otherwise be visible in each user's HMD display. As a result, from the perspective of each user, the display in each user's HMD displays both the virtual object coinciding with a black mask on the video wall such that the virtual object appears to be opaque or solid and a portion of the video wall content to hide mask-related artifacts.

Stated differently, the content displayed on the video wall or walls is visible to a user of a first HMD through a semi-transparent surface included in the HMD such as surface 2870 in Figure 28. A user of the HMD sees the content displayed on the video wall(s) as a background display. That is, computer graphics imagery or CGI produced by the display of the user's HMD appears displayed against or on that background display. A first CGI displayed in the HMD may be a virtual object the user is supposed to see against the background display such as the image 2970 of a dolphin against an underwater scene shown on video wall FRONT WALL in Figure 29. Included in the background display is a mask image or a shadow image that coincides with or aligns with the first CGI displayed in the first HMD from the perspective of the first HMD to provide an apparent increase in the opacity or solidity of the first CGI, e.g., a virtual object. The background display may include one or more additional mask images or shadow images that are included in the background display to provide increased opacity for the same or other virtual objects viewed by one or more other users in their respective one or more other HMD devices. However, a portion of these other mask or shadow images may be visible to the user of the first HMD and may unintentionally and undesirably create image artifacts for the user of the first HMD. In accordance with an aspect of the present principles, a second CGI may be generated in the display of the first HMD to hide such artifacts from the view of the user of the first HMD. For example, referring to Figure 29, the second CGI may be generated to represent an image corresponding to a portion of the background display such as an image of a head of a dolphin corresponding to portion 2930 of shadow image 2982. That is, the second CGI represents, reproduces, replicates or duplicates an image corresponding to a portion of the background display that should be seen by the user of the first HMD at the position of the undesirable artifacts. Thus, the second CGI effectively hides, blocks or cancels the artifact or artifacts for the first user. Similar artifacts may occur for other users with other HMDs and, in accordance with the present principles, similar cancellation of the artifacts may occur by displaying additional CGI as needed in a user's HMD. Thus, the present principles provide for improving the appearance of virtual objects and reducing or eliminating artifacts associated with the appearance improvement for one user or multiple users in an ARENV.

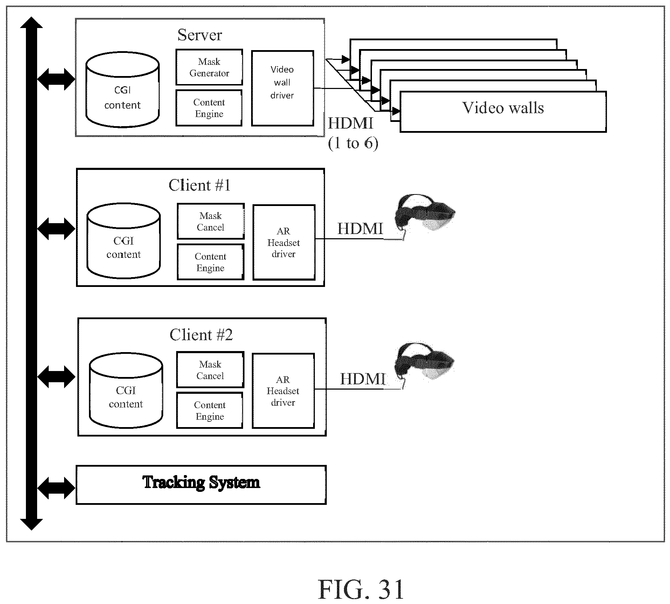

In accordance with another aspect of the present principles, an exemplary embodiment that manages artifact reduction as described above may include a server-client architecture as illustrated in Figure 31. The exemplary architecture shown in Figure 31 includes a server driving one or more video walls, two client devices that drive HMD devices and a tracking system. In Figure 31, the various components producing content are coupled to the display devices, i.e., video walls, HMD devices, etc., by HDMI connections. However, such connections are merely exemplary. As will be clear to one skilled in the art, various forms of interconnection of components including both wired and wireless connections are possible and appropriate for use with an embodiment such as that shown in Figure 31.

Continuing with Figure 31 in more detail, the server may contain data storage for storing, e.g., CGI content, along with one or more processors. The one or more processors may operate to provide functionality including a Content Engine. The content engine assembles content to be provided to or displayed on the video wall or walls. The content may include 3D content that includes CGI and may include a mask or masks as described above. The Content Engine may be a separate processor or hardware engine to produce content or may be an application such as Unity3D running on a processor to produce content in accordance with the present principles. The masks may be produced by a separate processor designated Mask Generator in Figure 31 or may be produced by a mask function implemented by one or more other processors included in the server, e.g., the Content Engine. A rendering engine function included in the server and labeled "Video Wall Driver" in Figure 31 drives the video wall or walls to produce displays of the content including masks on the video wall or walls. The exemplary system illustrated in Figure 31 includes six video walls such as would be included in a cave or room having four video walls, a video ceiling and a video floor to provide a completely immersive experience ARENV.

A client device such as Client #1 or Client #2 in Figure 31 may include similar capabilities to those described in regard to the Server. For example, each client device shown in Figure 31 may include data storage for storing content such as CGI content, a mask canceling feature Mask Cancel operating in accordance with the present principles, a Content Engine, and a rendering engine that may also operate as the AR Headset driver in Figure 31 for driving a device such as an HMD worn by a user. An exemplary embodiment of a client device may comprise a standalone headset (e.g., Microsoft HoloLens) including features such as those associated with a client device illustrated in Figure 31 or a headset coupled to a processor such as a mobile device (mobile phone, tablet, laptop) or PC through a connection such as HDMI or other wired and/or wireless connection to provide processing capability such as that illustrated and described in regard to Figure 31.

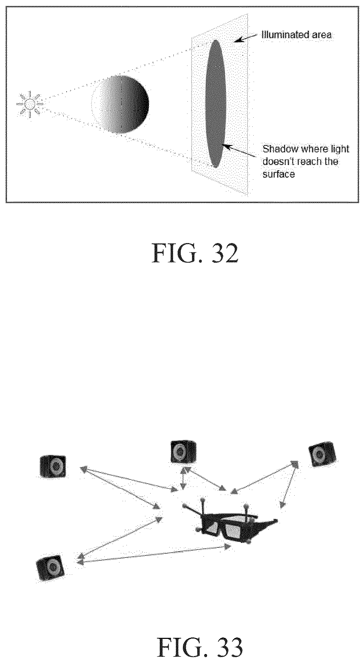

A tracking system such as that shown in Figure 31 operates as described herein to track the position and movement of each user. The tracking operation may occur in response to one or more of a position-indicating function located within the headset and/or within the ARENV. For example, the tracking system may include one or more of:
- a passive or active marker located on a device worn or mounted on a user such as a headset or HMD, and
- a plurality of high frequency (e.g., 240fps) cameras within the ARENV, e.g., a camera located in each corner of the ARENV to gather indications of position provided by each user, e.g., by an LED emitter on each user's HMD, and/or by image sensing and recognition., as illustrated in Figure 33.

An exemplary operation of the embodiment shown in Figure 31 may comprise the following. The information from the tracking system is collected and processed so as to know the position of each of the viewers or users. Producing position information from the tracking information may occur within the tracking system, within the server or by another processor associated with the ARENV. Based on the tracking information, the shape and the position of a mask on the screen is determined so as it is aligned with the perspective of the virtual object as seen by each of the users. An exemplary embodiment for determining the shape and position of a mask may comprise, for example, using a shadow casting application such as that provided by a system such as Unity3D and illustrated in Figure 32. In such an application, a light may be created and positioned at the location of the headset (e.g., light source 2850 in Figure 28). Then, the shadow can be created during the rendering process and it is possible to enable this additional light only for those objects for which shadows are needed to avoid undesirable interference with the scene at other times. Another exemplary embodiment for determining the shape and position of the mask or shadow according to the position of the viewer involves using a program known to those skilled in the art as "shader".

After determining the size and position of the mask or shadow, the CGI content may be rendered in the display of the headset or HMD of a viewer by rendering the CGI as colored pixels for pixels corresponding to the objects that are intended to be displayed on the video wall as part of a flat 2D picture and as black pixels (the mask) for pixels corresponding to the objects that are intended to be displayed in the AR headset as stereo 3D pictures representing virtual objects.

In accordance with another aspect of the present principles, a filtering operation may be included to filter the mask to reduce artifacts due to misalignment of the mask and the virtual object from the viewer's or user's point of view. The filtering should smooth the transition of the black and background silhouette that are added at the rendering step. An exemplary approach to filtering may comprise one or more of filtering in the content displayed on the video wall and filtering in the content displayed in the user's headset. For example, on the video wall, a smooth transition can be added by blending the black mask with the background in order to avoid sharp edges. Similarly, in the AR headset, a smooth transition can be added by blending the background with a black silhouette.

After determining the shape, size and position of a mask within the content for the perspective of each user, a system such as that shown in Figure 31 may drive the video wall or walls to display the content including the mask content. Driving the video walls may occur, for example, using a feature such as multiple display mode of a Unity3D application. In addition, to driving the display devices, the system must continually send updates for scene changes and for parameters such as frame lock to all devices, including updates of position of the masks and mask-hiding content displayed in the headset or headsets as viewers change position and content changes.

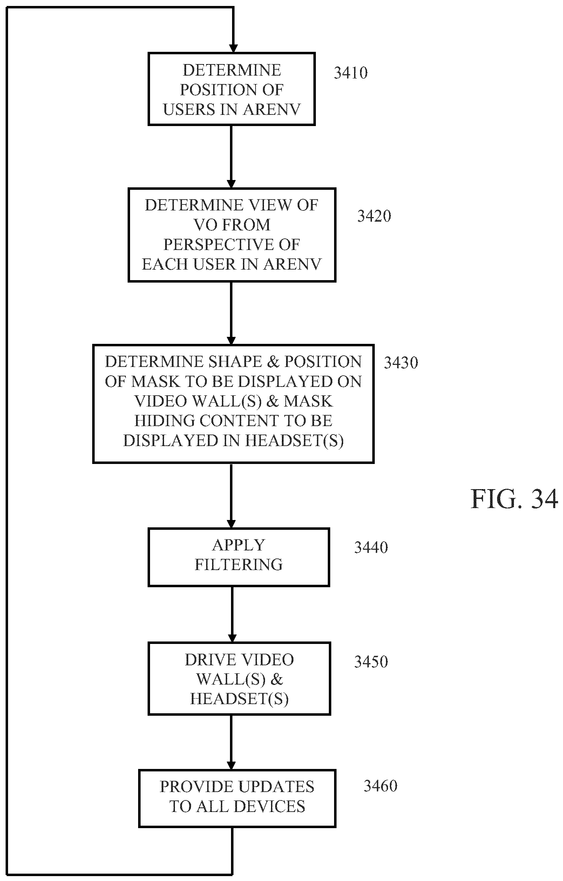

In accordance with another aspect of the present principles, an exemplary embodiment of a method of reducing or eliminating mask-related artifacts is illustrated in Figure 34. The method of Figure 34 may be implemented, for example, by a server or other device controlling an ARENV such as the server shown in Figure 31. In Figure 34, the method begins at step 3410 where the position of users in the ARENV is determined, e.g., by obtaining user location information from a tracking system such as the exemplary embodiment described above in regard to Figure 31. Following step 3410, the view of a virtual object (VO) to be displayed in a user headset is determined from the perspective of each user in the ARENV at step 3420. Then, at step 3430, using the information regarding the view from each user's perspective, the shape and position of a mask to be included in the content displayed on the video wall to align with the VO from each user's perspective is determined as is the shape, size and position of any mask-hiding content to be displayed in headsets to prevent artifacts. At step 3440, filtering is applied to the content to smooth sharp edges of the masks and prevent artifacts caused by edge effects. Following step 3440, the video wall or walls and headset or headsets are driven at step 3450 to display the content including the masks on the video wall(s) and the mask hiding content in the displays of the headset(s). Then, at step 3460 the process repeats to provide updates to all devices.

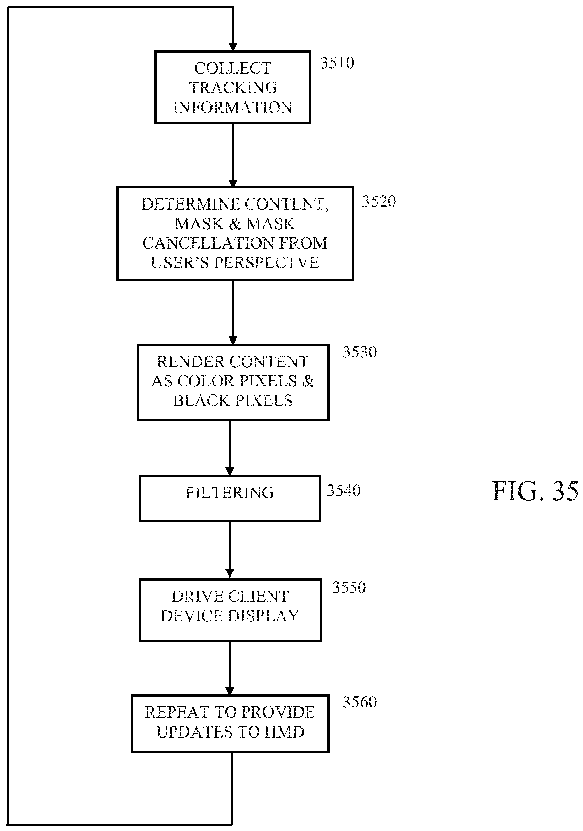

In accordance with the present principles, an exemplary method that may be performed by a client to eliminate or reduce mask-related artifacts is illustrated in Figure 35. In Figure 35, at step 3510 the client collects information from a tracking system such as the exemplary system explained above in regard to Figure 31 so as to know the position of each of the viewers. Next, the content to be displayed by the client is determined at step 3520. That is, content including image information for a virtual object, mask cancellation information as described herein, and other image information or components is processed (e.g., one or more of retrieved from storage, generated or created, assembled) to form the content to be displayed. The resulting content is then rendered at step 3530 as colored pixels for CGI content or objects that are intended to be displayed on the AR headset as 3D stereo pictures, e.g., a virtual object (VO). Mask cancellation is added during step 3530 to hide artifacts corresponding to portions of one or more black masks on the video wall or walls of the ARENV that are visible in the headset. Adding mask cancellation information at step 3530 takes into account the point of view of each viewer so as to add a replication of the background in the headset to hide the unwanted view of portions of black masks. An exemplary embodiment of adding mask cancellation at step 3530 may comprise processing using a shader program that will project a 2D pattern associated with a portion of the content intended for the video wall plane at the correct position in the headset display to hide the black pixels. In addition, the mask and/or mask cancellation may be filtered at step 3540 as described above in order to reduce artifacts due to misalignment and/or sharp edges of the masks. The resulting content including the mask-hiding content and filtering is then driven on to the display of the client, e.g., an AR headset or HMD display, at step 3550. Continuous updates, e.g., from the server, follow at step 3560 to update each user's headset for movement, scene changes, synchronization among the various users and the video walls, and to communicate parameters such as frame lock.

As an example of the use of a method such as that illustrated in Figure 35, a client such as a wearable device, e.g., a headset or HMD, may display first and second computer-generated images (CGI) on a transparent screen of the client device, e.g., half-silvered mirror 2870 shown in Figure 28. As described in regard to Figure 28, a transparent screen enables a user wearing the wearable display device to view through the transparent screen and see a background display such as content displayed on video walls of an ARENV while also viewing the first and second CGI. The client may display or produce the first CGI at a first position on the transparent screen to coincide with a first shadow image included in the background display. For example, a first shadow image may be included in the content in the background display to increase an apparent opacity of a virtual object included in the display of the client, e.g., the first CGI. The client may also display or produce a second CGI at a second position on the transparent screen. The second CGI may be positioned to hide a portion of a second shadow image included in the background display. For example, the second shadow image may be a mask included in the background display to increase an apparent opacity of a virtual object viewed in a second client device, e.g., a second HMD worn by a second user. Thus, the second CGI included in a display by the first client hides or blocks the second mask or shadow image for the second user that would otherwise be visible to the first user. The described example of the method of Figure 35 including first and second clients, first and second client devices, first and second CGI, and first and second shadow images may be better understood by also referring to Figures 29 and 30 and the associated description of those figures provided herein.

Although embodiments which incorporate the teachings of the present disclosure have been shown and described in detail herein, those skilled in the art can readily devise modifications and many other varied embodiments in light of the above teachings that still incorporate these teachings. For example, it is to be appreciated that the various features shown and described may be interchangeable, that is a feature shown in one embodiment may be incorporated into another embodiment. It is therefore to be understood that changes may be made in the particular embodiments of the disclosure disclosed which are within the scope of the disclosure.

In accordance with an aspect of the present principles, a method or system or apparatus is configured to provide within a room or cave-like space an alternative reality environment and comprising: video walls forming the walls of the cave-like space, memory and a processor configured to control the cave-like space wherein the memory stores software routines executable by the processor to create an alternative reality environment selected by at least one user within the space, the processor accessing and executing the software routines stored in the memory to control the video walls to display aspects of the alternative reality environment surrounding the at least one user within the space and to control at least one wearable device worn by the at least one user to enhance the alternative reality experience.

In accordance with an aspect of the present principles, an exemplary embodiment includes a processor configured to execute software routines stored in a memory and configured to control both a video wall and a wearable device to create an appearance of at least one volumetric object within a space wherein the volumetric object has an appearance of moving seamlessly within the space including from the video wall into the space.

In accordance with an aspect of the present principles, an exemplary embodiment comprises a central control unit or processor communicating with multiple unique personal AR or VR devices and across multiple platforms of individual devices for a shared user experience either with or without a 360-degree video element.

In accordance with an aspect of the present principles, an exemplary embodiment comprises a central controller or processor and/or devices controlled by the central controller receiving content authored to enable the controller to control the devices to provide virtual objects and effects created by the devices to seamlessly cross from a room scale environment to devices associated with or worn by individuals such as personal VR devices, e.g., AR glasses or HMD, thereby enabling seamless cross over from a room or theater environment such as a 360 video environment to individualized experiences such as game engine implementations of content.

In accordance with an aspect of the present principles, an exemplary embodiment comprises a controller configured to control a dedicated room with video on the walls and MR HMDs enabling a user to interact with virtual elements and, by combining the rendering of the virtual room with the rendering for AR elements in a single platform, thereby enabling fully interactive control over light, shadow, color, and space for all objects.

In accordance with an aspect of the present principles, an exemplary embodiment comprises a controller configured to control seamless OLED screens lining the walls, ceiling and floor of a room-scale space and an Augmented Reality headset including an enhanced contrast capability providing significant contrast for all the images in both the surround video and the augmented reality HMD, thereby providing enhanced image quality, and wherein a central computer platform or network drives the experience allowing all users to share the same images.

In accordance with another aspect of the present principles, an exemplary embodiment comprises a controller controlling a plurality of laser projectors located in space such as a large room and controlling a plurality of AR devices worn by a respective plurality of users to enable all users to interact with each other and with virtual elements within the room and with the environment which may include physical aspects of the space and/or virtual features, wherein the controller drives the experience enabling all users to share the same images.

In accordance with another aspect of the present principles, an exemplary embodiment comprises a controller controlling a plurality of physical VR devices used by users in a purpose-built location to enable real interaction with physical objects that are not necessarily what users see in headsets of the physical VR devices, wherein the controller maps and tracks all users in VR space to allow for interaction within the experience.

In accordance with another aspect of the present principles, an exemplary embodiment comprises a centralized controller controlling data that can be sent to multiple VR and/or AR type devices with or without the devices being in an environment such as a 360 wall space, wherein the centralized information may comprise, for example, data representing virtual objects that can be sent cross platform to various types of devices such as but not limited to AR glasses, tablets, smartphones, VR headsets, etc

In accordance with another aspect of the present principles, an exemplary embodiment comprises apparatus providing a transactional service within a virtual reality environment and including a centralized controller controlling data that can be sent to multiple VR and/or AR type devices with or without the devices being in an environment such as a 360 wall space, wherein the centralized information may comprise, for example, data representing virtual objects that can be sent cross platform to various types of devices such as but not limited to AR glasses, tablets, smartphones, VR headsets, etc., and wherein the controller communicates with the devices to provide a point of sale within the virtual space for enabling completion of transactions associated with the transactional service.

In accordance with another aspect, an embodiment of apparatus may comprise one or more processors configured to: provide image information to a wearable display device to produce a displayed image on a surface of the wearable display device that includes a first computer generated image (CGI) and a second CGI, wherein the first CGI represents a virtual object in a first position in the displayed image to coincide with a first shadow image included in a background display visible through the surface; and the second CGI represents an image corresponding to the background display and in as second position in the displayed image to hide a portion of a second shadow image included in the background display.

In accordance with another aspect, an embodiment of apparatus including one or more processors as described herein may include the one or more processors being further configured to produce the image information including information representing the first CGI in the first position in the displayed image and the second CGI in the second position in the displayed image.

In accordance with another aspect, an embodiment of apparatus as described herein may be included in a head mounted display (HMD) or a mobile device or a server.

In accordance with another aspect, an embodiment may comprise a system including a HMD comprising apparatus as described herein; a tracking device producing tracking information indicating a position of a user wearing the HMD; a second display device; and a server configured to provide second image information representing the background display to the second display device to produce the background display including the first and second shadow images; determine the first and second positions based on the tracking information and the background display; and produce the image information to represent the first CGI in the first position in the displayed image and the second CGI in the second position in the displayed image.

In accordance with another aspect, an embodiment may comprise a system including a mobile device comprising apparatus as described herein; a tracking device producing tracking information indicating a position of a user wearing the wearable display device; a second display device; and a server configured to: provide second image information representing the background display to the second display device to produce the background display including the first and second shadow images; determine the first and second positions based on the tracking information and the background display; and produce the image information to represent the first CGI in the first position in the displayed image and the second CGI in the second position in the displayed image.

In accordance with another aspect, an embodiment may comprise a system including a server comprising apparatus as described herein including one or more processors; a tracking device producing tracking information indicating a position of a user wearing the wearable display device; and a second display device; wherein the one or more processors are configured to: provide second image information representing the background display to the second display device to produce the background display including the first and second shadow images; determine the first and second positions based on the tracking information and the background display; produce the image information including the first CGI and the second CGI; and provide the image information to the wearable display device.

In accordance with another aspect, an embodiment of apparatus as described herein may further comprise a surface of the wearable display device to produce a displayed image and enable viewing both the displayed image including image information and a background display through the surface; wherein the background display represents an alternative reality environment; the first CGI represents the virtual object within the alternative reality environment; and the first shadow image appears to be aligned with the first CGI from a viewing perspective of the user wearing the wearable display device, thereby enhancing an apparent opacity of the virtual object represented by the first CGI.

In accordance with another aspect, an embodiment of a system as described herein may further comprise a second wearable display device worn by a second user; wherein the first CGI represents the virtual object viewed from a perspective of the first user; the system provides third image information to the second wearable display device representing a second displayed image including a third CGI and a fourth CGI; the third CGI represents the virtual object viewed from the perspective of the second user and positioned to coincide with the second shadow image; and the fourth CGI replicates a second portion of the background display visible to the second user and positioned to hide a portion of the first shadow image visible in the second wearable display.

In accordance with another aspect, an embodiment as described herein may further comprise a filter or filtering to filter at least one of the first image information and the second image information to reduce an image artifact corresponding to an edge of at least one of the first shadow image and the second shadow image and visible in at least one of the first and second wearable display devices.

In accordance with another aspect, an embodiment of a system as described herein may include a second display device comprising one or more video walls displaying the background display.

In accordance with another aspect, an embodiment of a system as described herein may include a second display device comprising a plurality of video display surfaces forming an alternative reality cave including one or more of a plurality of video walls of the cave and a video floor of the cave and a video ceiling of the cave.

In accordance with another aspect, an embodiment comprises a method including producing image information representing a first computer generated image (CGI) and a second CGI; and providing the image information to a wearable display device to produce a displayed image on a surface of the wearable display device that includes the first CGI and the second CGI, wherein the first CGI represents a virtual object in a first position in the displayed image to coincide with a first shadow image included in a background display visible through the surface; and the second CGI represents an image corresponding to the background display and in as second position in the displayed image to hide a portion of a second shadow image included in the background display.

In accordance with another aspect, an embodiment of a method as described herein may include, before producing the image information, processing location information indicating a location of a user wearing the wearable display device; and determining a first position of a first CGI and a second position of a second CGI based on the location information.

In accordance with another aspect, an embodiment of a method as described herein may include processing location information to determine a third position for the first shadow image in the background display and a fourth position for the second shadow image in the background display; producing second image information representing the background display including the first and second shadow images in the third and fourth positions, respectively; and providing the second information to a second display device to produce the background display.

In accordance with another aspect, an embodiment may comprise a non-transitory computer readable medium storing executable program instructions to cause a computer executing the instructions to perform a method according to any embodiment of a method as described herein.

In accordance with another aspect, an embodiment of apparatus may include a first wearable display device comprising a surface enabling viewing, through the surface, a background display of an alternative reality environment for a first user wearing the wearable display device; and one or more processors coupled to the first wearable display device and configured to: produce on the surface a display of a first computer-generated image (CGI) and a second CGI, both visible to the first user along with the background display; wherein the display of the first CGI is positioned to coincide with a first shadow image included in the background display; the second CGI replicates a portion of the background display; and the display of the second CGI is positioned to hide a portion of a second shadow image included in the background display.

In accordance with another aspect, an embodiment of apparatus as described herein may include a second wearable display device worn by a second user; wherein the first CGI represents a virtual object viewed from a perspective of the first user; the second wearable display device displays a third CGI representing the virtual object viewed from the perspective of the second user and positioned to coincide with the second shadow image; and the second wearable display device displays a fourth CGI replicating a second portion of the background display visible to the second user and positioned to hide a portion of the first shadow image visible in the second wearable display.

In accordance with another aspect, an embodiment of apparatus as described herein may include the apparatus being configured to: receive location information indicating respective locations for the first and second users within the alternative reality environment; and process the location information to determine positions for display of the first and second CGI.

In accordance with another aspect, an embodiment of apparatus or a system as described herein may include a server providing content to be displayed in a background display of an alternative reality environment.

In accordance with another aspect, an embodiment of apparatus or a system as described herein may include a tracking module providing information indicating a location within an alternative reality environment of each user of the alternative reality environment.

In accordance with another aspect, an embodiment of apparatus or a system as described herein may include processing the location information and providing an update to the background display and to one or more wearable display devices based on the location information wherein the update includes a repositioning of at least one of the first and second shadow images to keep the first CGI aligned with the first shadow image and the second CGI positioned to hide the portion of the second shadow image.

In accordance with another aspect, an embodiment of a method may comprise producing a display of first and second computer-generated images (CGI) on a transparent or semi-transparent screen of a first wearable display device, wherein the screen enables a first user wearing the wearable display device to view through the screen a background display of an alternative reality environment while also viewing the first and second CGI; producing the first CGI at a first position on the transparent screen to coincide with a first shadow image included in the background display; and producing the second CGI at a second position on the transparent screen to hide a portion of a second shadow image included in the background display.

In accordance with another aspect, an embodiment of apparatus or a method as described herein may provide for producing a background display on a display device of an alternative reality environment; detecting a location of a first user within the alternative reality environment, wherein the user is wearing a first head mounted display (HMD) device; providing to the first HMD device information enabling the first HMD device to display first and second computer-generated (CGI) images on a transparent or semi-transparent display screen of the first HMD device enabling the first user to view the background display through the transparent display screen along with viewing the first and second CGI on the display screen, wherein: the first CGI represents a virtual object appearing to be in the alternative reality environment and appearing to be viewed from the respective location of the first user within the virtual reality environment; and the first CGI is positioned on the screen to coincide with a first shadow image included in the background display to increase an apparent opacity of the first CGI for the first user; and the second CGI replicates a portion of the background display and is positioned on the screen to mask a portion of a second shadow image included in the background display to increase an apparent opacity of a third CGI visible in a second wearable display device worn by a second user of the alternative reality environment.

In accordance with the present principles, apparatus or a method as described herein may include the first shadow image included in the background display providing a first increase in a first apparent opacity of the first CGI for the first user; and the second shadow image included in the background display providing a second increase in a second apparent opacity of a third CGI visible in a second wearable display device worn by a second user of the alternative reality environment.

In accordance with another aspect, an embodiment of apparatus or a method as described herein may include processing tracking information to determine location information indicating a location of the first user; and processing the location information to determine a position of the first CGI and second CGI in the display of the first device such that the first CGI aligns with the first shadow image included in the background display to produce the first increase in the first apparent opacity and the second CGI aligns with the second shadow image to reduce visibility of the second shadow image for the first user.

In accordance with another aspect, an embodiment of apparatus or a method or a system as described herein may include filtering to reduce an image artifact visible to the first user caused by a sharp edge of the first and second shadow images.

In accordance with another aspect, an embodiment of apparatus or a system as described herein may include a second wearable display device comprising a second transparent or semi-transparent screen enabling viewing, through the screen, the background display such as an alternative reality environment for a second user wearing the second wearable display device, wherein the second wearable display device displays a third CGI representing the virtual object viewed from the perspective of the second user and positioned to coincide with the second shadow image; and the second wearable display device displays a fourth CGI corresponding to a second portion of the background display within a second field of view of the second wearable display device and positioned to hide a portion of the first shadow image in the second field of view.

In accordance with another aspect, an embodiment of apparatus or a system as described herein may include a plurality of head mounted displays (HMD) for use by a respective plurality of users, wherein each of the plurality of users views the background display, each of the plurality of HMDs displays the first CGI from the perspective of the respective user of the HMD, each of the plurality of HMDs displays the first CGI aligned with a respective first one of a plurality of shadow images included in the background display, a portion of a second one of the plurality of shadow images is within a field of view of each of the plurality of HMDs, each of the plurality of HMDs displays a second CGI replicating a corresponding portion of the background image and positioned to prevent viewing of the portion of the second one of the plurality of shadow images.

## Claims

1. Apparatus comprising one or more processors configured to:
provide image information to a wearable display device to produce a displayed image on a surface of the wearable display device that includes a first computer generated image (CGI) and a second CGI, wherein
- the first CGI represents a virtual object in a first position in the displayed image to coincide with a first shadow image included in a background display visible through the surface; and
- the second CGI represents an image corresponding to the background display and in a second position in the displayed image to hide a portion of a second shadow image included in the background display.

2. The apparatus of claim 1 wherein the one or more processors are further configured to produce the image information including information representing the first CGI in the first position in the displayed image and the second CGI in the second position in the displayed image.

3. A head mounted display (HMD) or mobile device or server comprising the apparatus of claim 1 or claim 2.

4. A system comprising:
a HMD including the apparatus of claim 1;
a tracking device producing tracking information indicating a position of a user wearing the HMD;
a second display device;
a server configured to:
provide second image information representing the background display to the second display device to produce the background display including the first and second shadow images;
determine the first and second positions based on the tracking information and the background display; and
produce the image information to represent the first CGI in the first position in the displayed image and the second CGI in the second position in the displayed image.

5. A system comprising:
a mobile device including the apparatus of claim 1;
a tracking device producing tracking information indicating a position of a user wearing the wearable display device;
a second display device;
a server configured to:
provide second image information representing the background display to the second display device to produce the background display including the first and second shadow images;
determine the first and second positions based on the tracking information and the background display; and
produce the image information to represent the first CGI in the first position in the displayed image and the second CGI in the second position in the displayed image.

6. A system comprising:
a server according to claim 3;
a tracking device producing tracking information indicating a position of a user wearing the wearable display device; and
a second display device;
wherein the one or more processors being configured to:
provide second image information representing the background display to the second display device to produce the background display including the first and second shadow images;
determine the first and second positions based on the tracking information and the background display;
produce the image information including the first CGI and the second CGI; and
provide the image information to the wearable display device.

7. Apparatus of claim 1 or 2, or HMD, mobile device or server of claim 3, or system of any of claims 4-6 wherein:
the surface of the wearable display device enables viewing both the displayed image including the image information and the background display through the surface;
the background display represents an alternative reality environment;
the first CGI represents the virtual object within the alternative reality environment; and
the first shadow image appears to be aligned with the first CGI from a viewing perspective of the user wearing the wearable display device, thereby enhancing an apparent opacity of the virtual object represented by the first CGI.

8. A system according to any of claims 4 to 7 further comprising
a second wearable display device worn by a second user; wherein
the first CGI represents the virtual object viewed from a perspective of the first user;
the system provides third image information to the second wearable display device representing a second displayed image including a third CGI and a fourth CGI;
the third CGI represents the virtual object viewed from the perspective of the second user and positioned to coincide with the second shadow image; and
the fourth CGI replicates a second portion of the background display visible to the second user and positioned to hide a portion of the first shadow image visible in the second wearable display.

9. A system according to claim 8 wherein the one or more processors are further configured to filter at least one of the first image information and the second image information to reduce an image artifact corresponding to an edge of at least one of the first shadow image and the second shadow image and visible in at least one of the first and second wearable display devices.

10. A system according to any of claims 4 to 9 wherein the second display device comprises one or more video walls displaying the background display.

11. A system according to any of claims 4 to 9 wherein the second display device comprises a plurality of video display surfaces forming an alternative reality cave including one or more of a plurality of video walls of the cave and a video floor of the cave and a video ceiling of the cave.

12. A method comprising:
producing image information representing a first computer generated image (CGI) and a second CGI; and
providing the image information to a wearable display device to produce a displayed image on a surface of the wearable display device that includes the first CGI and the second CGI, wherein
- the first CGI represents a virtual object in a first position in the displayed image to coincide with a first shadow image included in a background display visible through the surface; and
- the second CGI represents an image corresponding to the background display and in as second position in the displayed image to hide a portion of a second shadow image included in the background display.

13. The method of claim 12 further comprising:
before producing the image information, processing location information indicating a location of a user wearing the wearable display device; and
determining the first position and the second position based on the location information.

14. The method of claim 13 further comprising:
processing the location information to determine a third position for the first shadow image in the background display and a fourth position for the second shadow image in the background display;
producing second image information representing the background display including the first and second shadow images in the third and fourth positions, respectively; and
providing the second information to a second display device to produce the background display.

15. A non-transitory computer readable medium storing executable program instructions to cause a computer executing the instructions to perform a method according to any of claims 12 to 14.
